(19) Europäisches Patentamt / European Patent Office / Office européen des brevets

(11) **EP 3 913 839 B1**

(12) **EUROPEAN PATENT SPECIFICATION**

(45) Date of publication and mention
of the grant of the patent:
**29.07.2026  Bulletin 2026/31**

(21) Application number: **20748988.1**

(22) Date of filing: **03.02.2020**

(51) International Patent Classification (IPC):
**H04L 5/00** *(2006.01)*

(52) Cooperative Patent Classification (CPC):
**H04L 5/0092; H04L 5/0012; H04L 5/0053;
H04L 5/0064; H04W 48/02; H04W 48/12;**
H04L 5/0026; H04L 5/0048; H04L 27/26025;
H04W 48/16

(86) International application number:
**PCT/CN2020/074180**

(87) International publication number:
**WO 2020/156559 (06.08.2020 Gazette 2020/32)**

(54) **DATA TRANSMISSION METHOD, NETWORK DEVICE AND TERMINAL DEVICE**

DATENÜBERTRAGUNGSVERFAHREN, NETZWERKVORRICHTUNG UND
ENDGERÄTEVORRICHTUNG

PROCÉDÉ DE TRANSMISSION DE DONNÉES, DISPOSITIF DE RÉSEAU ET DISPOSITIF
TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **03.02.2019  CN 201910109064
16.08.2019  CN 201910760324**

(43) Date of publication of application:
**24.11.2021  Bulletin 2021/47**

(73) Proprietor: **Huawei Technologies Co., Ltd.
Shenzhen, Guangdong 518129 (CN)**

(72) Inventors:
• **ZHENG, Juan
Shenzhen, Guangdong 518129 (CN)**

• **LI, Chaojun
Shenzhen, Guangdong 518129 (CN)**

(74) Representative: **Gill Jennings & Every LLP
The Broadgate Tower
20 Primrose Street
London EC2A 2ES (GB)**

(56) References cited:
WO-A1-2018/128427       WO-A1-2018/128427
WO-A2-2018/230965       CN-A- 104 105 162
US-A1- 2018 131 479

• **SAMSUNG: "Remaining Issues of NR-PBCH",
3GPP TSG RAN WG1 #89 R1-1707929, 19 May
2017 (2017-05-19), XP051273127, DOI:
20200417122902A**

Description

## TECHNICAL FIELD

Embodiments of this application relate to the field of communications technologies, and in particular, to a data transmission method, a corresponding network device, and a corresponding terminal device.

## BACKGROUND

Fifth-generation (the Fifth-Generation, 5G) mobile communications technology new radio (New Radio, NR) is a global 5G standard designed based on a new air interface of orthogonal frequency division multiplexing (Orthogonal Frequency Division Multiplexing, OFDM), and is also a very important basis for next-generation cellular mobile technologies. 5G technologies provide a wide variety of services, including an enhanced mobile broadband (Enhanced Mobile Broadband, eMBB) service, an ultra-reliable low-latency communication (Ultra-Reliability Low-Latency Communication, URLLC) service, and a massive machine-type communications (Massive Machine-Type Communication, mMTC) service. Diversified services of an NR system require that the NR system is designed to satisfy access requirements of terminals having different bandwidth capabilities. For example, an eMBB terminal may access the NR system by obtaining broadband information of the NR system. However, for some mMTC terminals, in consideration of design costs, low power consumption, and the like, a working bandwidth for data transmission is usually not designed to be very large. Further, considering a geographical environment in which the mMTC terminals are located, a plurality of times of repeated transmission are usually required to ensure correct receiving, for example, for an electricity meter reading service. In addition, mMTC terminals that support video surveillance backhaul have higher requirements on a data transmission rate, and may be considered as mid-range and high-end terminals. In conclusion, the diversified services require that the NR system is designed to satisfy access requirements of different types of terminals.

The conventional technology relates to an access process in which an mMTC terminal accesses fourth generation (the Fourth-Generation, 4G) mobile communications technology long term evolution (Long Term Evolution, LTE). To be specific, a redundant bit included in a master information block (Master Information Block, MIB) carried on a physical broadcast channel (Physical Broadcast Channel, PBCH) is used to indicate scheduling information of a system information block 1 (System Information Block, SIB 1) that is applied to the mMTC terminal device. However, because the MIB in the current NR system has only 1-bit redundant bit information, indication content is limited. Therefore, an access requirement of the mMTC terminal device in the NR system cannot be satisfied. In other words, the foregoing method cannot be directly applied to a process in which the mMTC terminal accesses the NR system.

WO 2018/128427 A1 describes a method of user equipment (UE) for system information transmission in a wireless communication system. The method comprises receiving, from a base station (BS), a synchronization signal/physical broadcasting channel (SS/PBCH) block comprising a PBCH that carries a master information block (MIB) including an SIB1 CORESET configuration, wherein the SIB1 CORESET configuration comprises a frequency location, a number of resource blocks (RBs) comprising an SIB 1 CORESET associated with the SS/PBCH block, and information of time domain resources of the SIB 1 CORESET, determining an initial active bandwidth part (BWP) comprising the frequency location, the number of RBs comprising the SIB 1 CORESET, and a numerology of remaining minimum system information (RMSI), and receiving, from the BS, a physical downlink control channel (PDCCH) mapped to at least one time-frequency resource within the SIB1 CORESET, wherein the PDCCH includes scheduling information of a physical downlink shared channel (PDSCH) containing an SIB 1.

WO 2018/230965 A2 describes a method for configuring a bandwidth for supporting a broadband carrier in a communication system. An operation method of a base station comprises the steps of: configuring a first bandwidth part and a second bandwidth part for a terminal; configuring a reserved resource for the first bandwidth part in a resource area in which the first bandwidth part and the second bandwidth part overlap; and performing an operation of transmitting or receiving a second data channel, which is scheduled to the second bandwidth part, together with the terminal by using the reserved resource. A described effect is that the performance of the communication system can be improved.

## SUMMARY

Embodiments of this application provide a data transmission method, to resolve a conventional technology problem that a terminal device with a limited bandwidth such as an mMTC terminal or having a special requirement such as coverage enhancement cannot access a network device in an NR system.

To achieve the foregoing objectives, the following technical solutions are used in the embodiments of this application. The scope of the invention is defined and limited by the appended independent claims. Further embodiments are set out by the dependent claims.

## BRIEF DESCRIPTION OF DRAWINGS

FIG. 1 is a schematic diagram of a possible application scenario according to an embodiment of this application;

FIG. 2 is a schematic diagram of a time-frequency structure of an SSB in an NR system according to an embodiment of this application;

FIG. 3 is a schematic diagram of a data transmission method according to an embodiment of this application;

FIG. 4 is a flowchart 1 of a data transmission method according to an embodiment of this application;

FIG. 5 is a flowchart 2 of a data transmission method according to an embodiment of this application;

FIG. 6 is a schematic diagram of a data transmission method according to an embodiment of this application;

FIG. 7 is a schematic diagram of obtaining configuration information by a terminal device according to an embodiment of this application;

FIG. 8 is another schematic diagram of obtaining configuration information by a terminal device according to an embodiment of this application;

FIG. 9 is still another schematic diagram of obtaining configuration information by a terminal device according to an embodiment of this application;

FIG. 10 is a schematic structural diagram of a network device according to an embodiment of this application;

FIG. 11 is a schematic structural diagram of a terminal device according to an embodiment of this application;

FIG. 12 is a schematic diagram of radio link detection according to an embodiment of this application;

FIG. 13 is a schematic diagram of other radio link detection according to an embodiment of this application;

FIG. 14 is a schematic diagram of a reference signal transmission method according to an embodiment of this application; and

FIG. 15 is a schematic diagram of another reference signal transmission method according to an embodiment of this application.

## DESCRIPTION OF EMBODIMENTS

Embodiments of this application provide a data transmission method. The method may be applied to a new radio (New Radio, NR) network in a fifth-generation (the Fifth-Generation, 5G) mobile communications system, or may be applied to a next-generation cellular mobile communications system and another subsequent mobile communications system. This is not limited in this application.

In the method provided in the embodiments of this application, a network device may be an access network device, for example, may be a base station such as a macro base station, a micro base station, or a distributed unit-control unit (distribute unit-control unit, DU-CU), and is a device that is deployed in a radio access network and that can perform wireless communication with a terminal device. The base station may be configured to mutually convert a received over-the-air frame and an internet protocol (internet protocol, IP) packet and serve as a router between the terminal device and a remaining part of an access network, where the remaining part of the access network may include an IP network. The base station may further coordinate attribute management of an air interface. For example, the base station may be an evolved NodeB (evolutional Node B, eNB or e-NodeB) in LTE, or may be a gNB in NR. The base station may alternatively be a radio controller in a cloud radio access network (cloud radio access network, CRAN) scenario, or may be a relay node, an access point, a vehicle-mounted device, a wearable device, a network device in a future evolved public land mobile network (public land mobile network, PLMN), or the like. This is not limited in the embodiments of this application. In the method, a first terminal device and a second terminal device or another terminal device each may be in a form of a smartphone, a tablet computer, or a smart TV box, or may be another desktop device, laptop device, or handheld device, for example, an ultra-mobile personal computer (Ultra-mobile Personal Computer, UMPC), a netbook, a personal digital assistant (Personal Digital Assistant, PDA), a portable multimedia player (Portable Multimedia Player, PMP), a dedicated media player, a consumer electronic device, a wearable device, an AR (augmented reality)/VR (virtual reality) device, or the like. From a perspective of a use scenario, the first terminal device and the second terminal device or the another terminal device each may be an enhanced mobile broadband (Enhanced Mobile Broadband, eMBB) terminal, an ultra-reliable low-latency communication (Ultra-Reliability Low-Latency Communication, URLLC) terminal, an enhanced machine-type communications (Enhanced Machine-Type Communication, eMTC) terminal, a massive machine-type communications (Massive Machine-Type Communication, mMTC) terminal, another type of terminal device working in the narrowband internet of things (Narrow Band Internet of Things, NB-IoT), or the like, for example, an NB-IoT data transfer unit (Data Transfer unit, DTU), is used in fields such as security, tracking, payment, measurement, and electronic consumption, and specifically relates to applications that aim at sensing and data collection, such as video surveillance, supply chain tracking, smart meter, remote surveillance, telemedicine, remote monitoring, smart city, intelligent agriculture, and forest fire prevention. It may be considered that all devices that can access the network device and perform data communication are terminal devices, for example, relay Relay devices. This is not limited in the embodiments of this application. The terminal device communicates with the network device by using an air interface (Air Interface).

It should be noted that the first terminal device and the second terminal device are devices of different types. For example, the first terminal device and the second terminal device have different transmission bandwidth capabilities, including different uplink data transmission bandwidth capabilities and/or different downlink data transmission bandwidth capabilities. In this case, the second terminal device may be understood as a narrowband terminal device, and the first terminal device may be understood as a normal terminal device, a broadband terminal device, a broadband and narrowband integrated terminal device, an intelligent terminal with an mMTC function, or a terminal device with a combination of functions.

For another example, the second terminal device needs to maintain normal data communication with the network device by using a coverage enhancement (Coverage Enhancement, CE) technology. For example, some MTC terminal devices need to be installed in a residential building, a basement, or a location protected by an insulation foil, a metal window, or a thick wall of a conventional building. Compared with a normal terminal device, the MTC terminal devices are prone to encounter a severer air interface penetration loss. Therefore, coverage enhancement needs to be performed. The first terminal device can maintain normal data communication with the network device without using the CE technology. In this case, the second terminal device may be understood as a CE terminal device, and the first terminal device may be understood as a normal terminal device. In the present invention, the CE technology includes but is not limited to a technology such as repeated data transmission or power boost.

For another example, a maximum quantity of times of repeated transmission that is required when the first terminal device normally communicates with the network device is different from that required when the second terminal device normally communicates with the network device. For example, the second terminal device is used for a meter reading service, and a geographical environment in which the second terminal device is located may be relatively remote and complex. Therefore, a plurality of times of repeated transmission are usually required to ensure correct receiving. Compared with the second terminal device, the first terminal device does not require an excessively large quantity of times of repeated transmission. In this case, the second terminal device may be understood as a terminal device for repeated transmission, and the first terminal device may be understood as a normal terminal device. It should be noted that, in the present invention, correct receiving may be that a first-time transmission (an initial transmission) success rate corresponding to data received by the terminal device from the network device is not lower than a threshold, for example, is not lower than 90%. For another example, in the present invention, the second terminal device may be considered as a low power wide area (low power wide coverage area access, LPWA) terminal device, and the first terminal device may be considered as an eMBB terminal device or an ultra-reliable low-latency communication (ultra-reliability low-latency communication, URLLC) terminal device.

For still another example, the first terminal device and the second terminal device have different parsing capabilities of parsing configuration information sent by the network device. For example, broadcast information carried on a PBCH includes 5-bit information, and the first terminal device learns through parsing that the 5 bits represent reserved bits. In other words, the 5 bits have no actual meaning. However, the second terminal device may parse the 5 bits and learn that the 5 bits represent a quantity of times an SIB 1 is repeatedly transmitted and a corresponding transport block size (Transport Block Size, TBS).

It should be noted that the foregoing examples are merely used as several examples. The first terminal device and the second terminal device may alternatively have another difference, or the first terminal device and the second terminal device may have all of the foregoing differences. This is not specifically limited in the present invention.

The different transmission bandwidth capabilities may be represented as different maximum transmission bandwidth capabilities of the two terminal devices. For example, a maximum data transmission bandwidth capability of the first terminal device (for example, a broadband terminal device) is 20 MHz, and a maximum data transmission bandwidth capability of the second terminal device (for example, a narrowband terminal device) is 5 MHz. Alternatively, the different transmission bandwidth capabilities may be represented as different basic transmission bandwidth capabilities of the two terminal devices. Herein, when a data transmission channel is established between the terminal device and the network device, the terminal device usually needs to first receive a synchronization channel and a broadcast channel that are sent by the network device. Therefore, it may be considered that bandwidths corresponding to the synchronization channel and the broadcast channel that are sent by the network device and that need to be received by the terminal device are basic transmission bandwidth capabilities that need to be possessed by the terminal device. Alternatively, the different transmission bandwidth capabilities may be represented as that a maximum bandwidth capability of the second terminal device (for example, a narrowband terminal device) is less than or equal to a minimum bandwidth capability of the first terminal device (for example, a broadband terminal device). For example, the second terminal device is an NB-IoT terminal device, and the first terminal device is an LTE terminal device. A data transmission bandwidth of the NB-IoT terminal device is one RB, that is, 180 kHz or 200 kHz (including a guard band). Because a frequency resource occupied by a primary synchronization signal (primary synchronization signal, PSS)/secondary synchronization signal (secondary synchronization signal, SSS) in an LTE system is six RBs, that is, 1.08 MHz or 1.44 MHz (including a guard band), it may be considered that the minimum bandwidth capability of the broadband terminal device is not less than 1.08 MHz. In this case, it may be considered that the maximum bandwidth capability of the second terminal device is less than or equal to the minimum bandwidth capability of the first terminal device. In the present invention, the maximum data transmission bandwidth capability of the first terminal device may be 100 MHz, 200 MHz, or 400 MHz, and the maximum data transmission bandwidth capability of the second terminal device may be 5 MHz, 10 MHz, or 20 MHz.

For another example, the second terminal device is an NB-IoT terminal device, and the first terminal device is an NR terminal device. Based on a design of a synchronization signal block (synchronization signal block, SSB) in the NR system, a minimum bandwidth capability of the NR terminal device may be considered as 20 RBs, where each RB includes 12 subcarriers. In the NR system, a subcarrier spacing is related to a frequency band on which the NR system is deployed, and is not a fixed value. A minimum subcarrier spacing of 15 kHz is used as an example, it may be considered that the minimum bandwidth capability is greater than or equal to 20 x 12 x 15 = 3.6 MHz, and it may still be considered that the maximum bandwidth capability of the second terminal device is less than or equal to the minimum bandwidth capability of the first terminal device.

It should be noted that, in the present invention, "the first terminal device and the second terminal device have different transmission bandwidth capabilities" may also be understood as "the first terminal device and the second terminal device are devices of different types".

In addition, features such as a type of the first terminal device, a type of the second terminal device, and the bandwidth capabilities corresponding to the first terminal device and the second terminal device are merely used as an example to describe differences between the first terminal device and the second terminal device, and are not specifically limited.

In addition, in the present invention, the configuration information that corresponds to the terminal device and that is for accessing the network device (or the configuration information that is for accessing the network device) may include all or some information that needs to be received by the terminal device from the network device for switching from an idle state (Idle State) or an inactive state (Inactive State) to a connected state (Connected State) in which a connection to the network device is established, or all or some information that needs to be received by the terminal device from the network device for switching from an idle state to an inactive (Inactive) state.

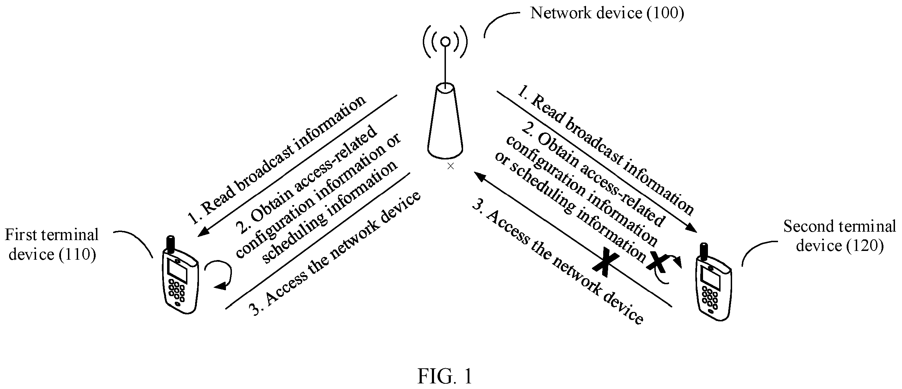

FIG. 1 is a schematic diagram of a possible application scenario according to this application. As shown in FIG. 1, an example in which a network device 100 is an NR access network device, and terminal devices are a bandwidth-limited terminal device and a normal terminal device (a first terminal device 110 is a normal terminal device, and a second terminal device 120 is a bandwidth-limited mMTC terminal device) is used. Before accessing the network device, the first terminal device 110 and the second terminal device 120 need to first obtain configuration information or scheduling information for accessing the network device 100, and then can successfully access the network device.

For example, the terminal device may obtain, by using the following method, the configuration information or the scheduling information for accessing the network device: first synchronizing with the access network device; obtaining a synchronization signal for data transmission with the access network device, for example, obtaining, by detecting a synchronization signal sent by the access network device, synchronization information (for example, a synchronization signal block (Synchronization Signal Block, SSB)) for data transmission with the access network device, where the synchronization information includes time synchronization information and/or frequency synchronization information; determining, based on the obtained synchronization information, broadcast information of the access network device that is carried on a physical broadcast channel (Physical Broadcast Channel, PBCH); and further reading system information (System Information, SI) as required, for example, first reading scheduling information of remaining minimum system information (Remaining Minimum System Information, RMSI) carried on a PBCH included in the SSB or configuration information (for example, indicated by using an information field pdcch-ConfigSIB1 corresponding to the scheduling information, and then obtaining system information necessary for data transmission with the access network device, where information included in the RMSI may be configuration information of a random access channel (Random Access CHannel, RACH) or scheduling information corresponding to other system information SI.

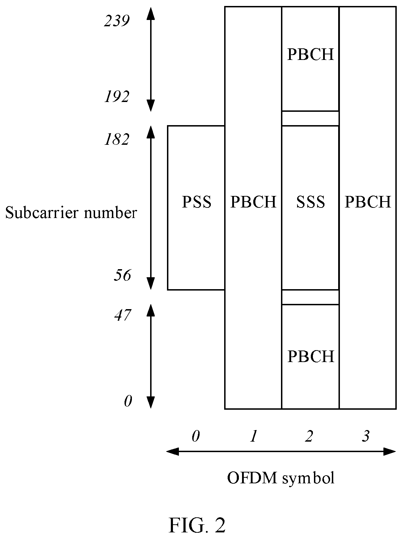

It should be noted that, although the first terminal device 110 and the second terminal device 120 have different transmission bandwidth capabilities, in an NR system, the two types of terminal devices have a same transmission bandwidth capability in receiving broadcast information. FIG. 2 is a schematic diagram of a time-frequency structure of a synchronization signal block SSB according to an embodiment of this application. As shown in FIG. 2, the SSB occupies four orthogonal frequency division multiplexing (Orthogonal Frequency Division Multiplexing, OFDM) symbols in time domain. On a first OFDM symbol, 12 RB resources in frequency domain are used to carry a primary synchronization signal PSS. On a second OFDM symbol, 20 RB resources in frequency domain are used to carry a broadcast channel PBCH. On a third OFDM symbol, 12 RBs and eight RBs in frequency domain are used to carry a secondary synchronization signal SSS and a broadcast channel PBCH, respectively. On a fourth OFDM symbol, 20 RB resources in frequency domain are used to carry a broadcast channel PBCH. One RB includes 12 subcarriers. The quantity of OFDM symbols is pre-configured, for example, specified in a protocol, or is determined by the terminal device by detecting a PBCH sent by the access network device. Because both the transmission bandwidth capability of the first terminal device 110 and the transmission bandwidth capability of the second terminal device 120 are not less than 20 RBs, the two types of terminal devices can successfully receive the broadcast information, to be specific, it can be ensured that the terminal devices can receive control information on the PBCH included in the synchronization signal block SSB. Alternatively, more specifically, if a subcarrier spacing corresponding to the SSB is 30 kHz, a bandwidth corresponding to the SSB is 7.2 MHz. If the transmission bandwidth capability of the first terminal device is 20 MHz, and the transmission bandwidth capability of the second terminal device is 10 MHz, both the first terminal device and the second terminal device can receive the SSB. Therefore, it may be understood that, the two types of terminal devices have the same transmission bandwidth capability in receiving the broadcast information. In this embodiment of this application, because both the first terminal device and the second terminal device can receive a same SSB, the network device does not need to separately design SSBs for different types of terminal devices, or more specifically, separately design a primary synchronization signal PSS, and/or a secondary synchronization signal SSS, and/or a broadcast channel PBCH. In this way, a unified air interface is implemented for efficient coexistence, repeated overheads of sending the SSB by the network device are avoided, and efficient energy saving is implemented.

However, in the NR system, the RMSI is usually carried on a physical downlink shared channel (Physical Downlink Shared Channel, PDSCH), and the PDSCH is scheduled by using a physical downlink control channel (Physical Downlink Control Channel, PDCCH). Due to a large bandwidth characteristic of the NR system, a frequency resource (a frequency resource range of distribution of information that is included in a downlink control channel PDCCH) corresponding to the physical downlink control channel PDCCH is configured by using information included in the PBCH. Specifically, information included in the physical downlink control channel PDCCH is carried in a time-frequency resource included in a control resource set (Control Resource SET, CORESET). A time resource and a frequency resource corresponding to the CORESET are indicated by using the information in the PBCH. However, in the current NR system, a master information block (Master Information Block, MIB) carried on the PBCH includes information pdcch-ConfigSIB 1. The information may include 8 bits, and is used to indicate configuration information of a CORESET in which control information for scheduling the RMSI is located, and an indicated minimum bandwidth of the CORESET is 24 RBs. The first terminal device 110 is, for example, a broadband terminal device, and can successfully access the network device in the NR system. The second terminal device 120 is, for example, a narrowband terminal device. Because of a broadband limitation, the second terminal device 120 can only receive the broadcast information, but cannot obtain subsequent access-related configuration information or scheduling information, and therefore, cannot successfully access the network device. Specifically, the following Table 1 shows bandwidths corresponding to the CORESET in which the control information for scheduling the RMSI is located in the current NR system.

**Table 1**

| Number of RBs corresponding to CORESET | 24 | | 48 | | 96 | |
|---|---|---|---|---|---|---|
| Subcarrier spacing | 15kHz | 30kHz | 15kHz | 30kHz | 15kHz | 30kHz |
| Transmission bandwidth capability | 5MHz | 10MHz | 10MHz | 20MHz | 20MHz | 40MHz |

The transmission bandwidth capability indicates a minimum data transmission bandwidth of the terminal device when the NR system is configured by using a corresponding subcarrier spacing and a quantity of RBs corresponding to the CORESET. For example, when the NR system is configured by using a 30 KHz subcarrier spacing and 48 RBs corresponding to the CORESET, because the second terminal device whose bandwidth capability is less than 20 MHz, for example, 10 MHz, cannot receive the control information for scheduling the RMSI, as described above, the second terminal device cannot successfully access the NR system. For another example, when the NR system is configured by using a 30 KHz subcarrier spacing and 24 RBs corresponding to the CORESET, the second terminal device whose bandwidth capability is less than 10 MHz, for example, 5 MHz, cannot successfully access the NR system.

Generally, an application scenario of the second terminal device such as the mMTC terminal device is an internet of things service application scenario with low power consumption, a large quantity of connections, a low latency, and high reliability, and has features such as a small data packet, low power consumption, and a large quantity of connections. These terminals are widely distributed and numerous. Therefore, the network needs to support more than 100 billion connections and satisfy a requirement of a specific connection density indicator. In this case, ultra-low power consumption and ultra-low costs of the terminals need to be ensured. Therefore, it may be considered that improving the bandwidth capability of the terminal device to resolve the foregoing problem that the terminal device cannot access the NR system is contrary to a principle of the ultra-low costs. In other words, based on a design of the existing second terminal device such as the mMTC terminal device, a technical problem existing in the conventional technology proposed in this application still exists.

Based on the foregoing existing problem, an embodiment of this application provides a data transmission method, so that such a terminal device such as the mMTC terminal device can successfully access a network device without increasing additional system overheads.

It should be noted that FIG. 1 is merely an example, and does not constitute a limitation on an actual application scenario. Actually, the data transmission method provided in this application may further include another type of terminal device such as a third terminal device or a fourth terminal device, and each terminal device may still have a capability difference such as bandwidth. A specific data transmission idea and method are the same as the idea and method of the first terminal device and the second terminal device that are described in the embodiments of this application.

In addition, in different systems, the RMSI may have different names. For example, in a long term evolution (Long Term Evolution, LTE) system, an SIB-1 sent by an access network device may also be understood as the RMSI. In 5G NR, because on-demand SIB transmission is supported, necessary system information is divided into two parts: MIB and RMSI for fast synchronization and access. Other unnecessary information is read when required. It can be learned that the RMSI is essentially the SIB 1, which is used to notify configuration information such as a frequency domain resource and a reference signal power. In this application, for ease of description, after the terminal device detects the PBCH sent by the network device, to transmit data with the network device, a system message that is first detected and that is sent by the network device is referred to as the RMSI. Alternatively, more usually, after the terminal device detects the PBCH sent by the network device, to perform data transmission with the network device, information that is from the network device and that needs to be received by the terminal device from an idle state or an inactive state (Inactive State) to a connection state in which the terminal device establishes a connection to the network device, or information that is from the network device and that needs to be received by the terminal device from an idle state to an inactive state, may be referred to as RMSI information.

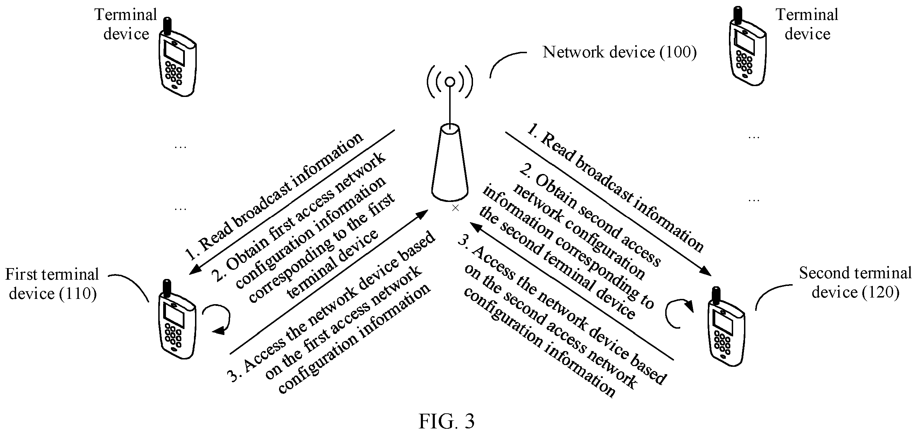

The following describes in detail the data transmission method provided in the embodiments of this application with reference to FIG. 1 and FIG. 2. A basic principle of the method is as follows: A network device delivers, to terminal devices, configuration information that is for accessing the network device. After receiving the information, the different terminal devices may obtain, based on different transmission bandwidth capabilities of the terminal devices without increasing additional system overheads, different configuration information that is for accessing the network device. In this way, the network device can be connected successfully. FIG. 3 is a schematic diagram of a data transmission method according to an embodiment of this application. A network device 100 sends a broadcast message that includes configuration information for accessing the network device to a first terminal device 110, a second terminal device 120, and another terminal device that camp on or may camp on a cell of the network device 100. The first terminal device 110, the second terminal device 120, and the another terminal device may be terminal devices of a same type, or may be terminal devices of different types. For example, a type may be represented by using a data transmission bandwidth capability, and different types of terminal devices may be terminal devices having different data transmission bandwidth capabilities. Alternatively, a type may be represented by using a maximum data transmission rate that can be supported by a terminal device, and different types of terminal devices may be terminal devices having different maximum data transmission rates. Alternatively, a type may be represented by using a maximum data block size (Transmission Block Size, TBS) that can be supported by a terminal device in a single transmission. Specifically, in the terminal devices in FIG. 3, the first terminal device 110 is a broadband terminal device or a broadband and narrowband integrated terminal device, and the second terminal device 120 is a narrowband terminal device. Different terminal devices parse the configuration information based on capabilities such as transmission bandwidths of the terminal devices, and obtain corresponding configuration parameters suitable for the capabilities of the terminal devices, so as to successfully access the network device. For example, as shown in FIG. 3, the first terminal device 110 obtains, through parsing, first access network configuration information corresponding to the first terminal device 110, and the second terminal device 120 obtains, through parsing, second access network configuration information corresponding to the second terminal device 120. Processing of another terminal device is the same as that of the first terminal device 110 and the second terminal device 120. Different types of terminal devices obtain different access network configuration information.

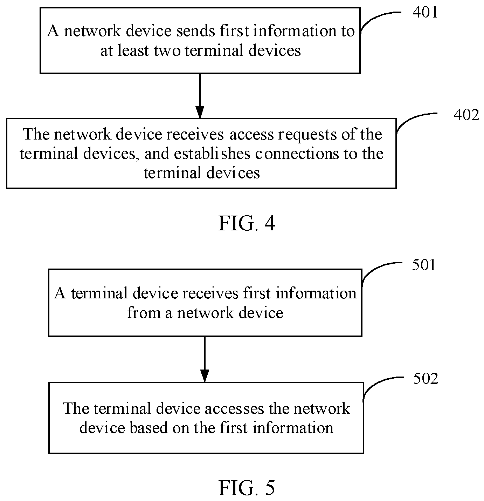

FIG. 4 is a flowchart 1 of a data transmission method according to an embodiment of this application. The method is applied to a network device 100, and the method may include the following steps.

401: The network device 100 sends first information to at least two terminal devices, where the first information may include configuration information that is for accessing the network device 100.

In some embodiments of this application, the network device 100 may generate a broadcast message, and further optionally send, by using a physical broadcast channel PBCH, the broadcast message to all terminal devices that camp on a cell of the network device 100 and/or terminal devices that may camp on the cell of the network device 100. The broadcast message carries the first information. The first information is RMSI control channel configuration information that is included in master information block MIB information, namely, pdcch-ConfigSIB1 information. The RMSI control channel configuration information may include but is not limited to at least one of the following: a multiplexing pattern (multiplexing pattern) between an SSB and a control resource set CORESET in which an RMSI control channel is located, where the multiplexing pattern may include time division multiplexing (Time Division Multiplexing, TDM), frequency division multiplexing (Frequency Division Multiplexing, FDM), and code division multiplexing (Code Division Multiplexing, CDM); a quantity of resource blocks corresponding to the CORESET in which the RMSI control channel is located; a quantity of symbols corresponding to the CORESET in which the RMSI control channel is located; a frequency offset required for determining the CORESET; a monitoring occasion (monitoring occasions) of the RMSI control channel; and the like.

The first information is used by a first terminal device 110 to parse the first information to obtain second information, and the second information is configuration information that corresponds to the first terminal device 110 and that is for accessing the network device 100. In addition, the first information is further used by a second terminal device 120 to parse the first information to obtain third information, and the third information is configuration information that corresponds to the second terminal device 120 and that is for accessing the network device 100. The terminal devices may be the first terminal device 110 and the second terminal device 120. The first terminal device and the second terminal device have different transmission bandwidth capabilities.

Optionally, the first terminal device may further parse out the third information based on the first information, and the first terminal device may perform data transmission with the network device based on the third information. In other words, the first terminal device may determine, based on the first information, the configuration information (namely, the third information) that corresponds to the second terminal device and that is for accessing the network device. Further, the first terminal device may perform data transmission with the network device based on the third information. In this case, the first terminal device may obtain the second information and the third information based on the first information, and may perform data transmission with the network device based on the second information and/or the third information. Therefore, with reference to the foregoing description, the first terminal device may also be understood as a terminal device that has both a broadband data transmission capability and a narrowband data transmission capability. For ease of description, the terminal device that has both the broadband data transmission capability and the narrowband data transmission capability is understood as a broadband and narrowband integrated terminal device.

For example, in the present invention, the narrowband and broadband integrated terminal device may determine both configuration information of a first RMSI control channel and configuration information of a second RMSI control channel based on a pdcch-ConfigSIB1 field included in the PBCH. Because the configuration information of the second RMSI control channel corresponds to the second terminal device (a narrowband terminal device), a bandwidth of the second RMSI control channel is not greater than a bandwidth of the first RMSI control channel that corresponds to the first terminal device (for example, a broadband and narrowband terminal device). Generally, a smaller data transmission bandwidth indicates lower power consumption required when the terminal device performs data transmission with the network device. Therefore, power can be saved when the broadband and narrowband integrated terminal device performs data transmission with the network device by using the configuration information of the second RMSI control channel. In addition, if a coverage enhancement requirement of the narrowband terminal device is considered in the configuration information of the second RMSI control channel, coverage enhancement may also be implemented when the broadband and narrowband integrated terminal device performs data transmission with the network device by using the configuration information of the second RMSI control channel. In addition, because the broadband and narrowband integrated terminal device may directly obtain the configuration information that corresponds to the narrowband terminal device (which corresponds to the second terminal device in the present invention) and that is for accessing the network device, the network device does not need to additionally send the third information for the broadband and narrowband integrated terminal device. In this way, a unified air interface design can be implemented for efficient coexistence, repeated overheads are avoided, and energy is efficiently saved.

More generally, in the present invention, the first terminal device may have a capability of the second terminal device. In other words, the first terminal device may perform data transmission with the network device by using the configuration information that corresponds to the second terminal device and that is for accessing the network device.

Different types of terminal devices have different parsing manners for same RMSI control channel configuration information, namely, pdcch-ConfigSIB1 information. In addition, the different types of terminal devices have different parsing capabilities for the same pdcch-ConfigSIB1 information, and obtain different configuration information.

"Correspond to" means that the configuration information for accessing the network device 100 is configuration information designed for the first terminal device 110 or the second terminal device 120 to access the network device 100. In other words, the first terminal device 110 or the second terminal device 120 may determine, based on the configuration information, the configuration information for accessing the network device. A specific type of configuration information that is parsed out by the terminal device based on the first information depends on a specific case of the terminal device, for example, a transmission bandwidth capability or a maximum quantity of times of repeated transmission. More generally, the different types of terminal devices may parse, based on the same first information, out different configuration information that matches the types of the terminal devices. It should be noted that the terminal device that receives the first information may alternatively be a third terminal device, a fourth terminal device, or another type of terminal device. In this embodiment, the first terminal device 110 and the second terminal device 120 are used as an example to describe the method. For a data transmission method of another type of terminal device, refer to the method provided in this embodiment.

402: The network device 100 receives access requests/an access request of the first terminal device 110 and/or the second terminal device 120, and establishes connections/a connection to the first terminal device 110 and/or the second terminal device 120.

Specifically, after the first terminal device 110 and/or the second terminal device 120 parse/parses the first information to obtain the configuration information for accessing the network device 100, if the first terminal device 110 and/or the second terminal device 120 need/needs to establish connections/a connection to the network device 100 to perform subsequent data transmission, the first terminal device 110 and/or the second terminal device 120 send/sends the access requests/the access request to the network device 100. The network device 100 establishes, in response to the access requests/the access request, the connections/the connection to the first terminal device 110 and/or the second terminal device 120.

In a first example not forming part of the invention, the second information is configuration information that corresponds to the first terminal device 110 and that is of a first remaining minimum system information RMSI control channel. The third information is configuration information that corresponds to the second terminal device 120 and that is of a second remaining minimum system information RMSI control channel.

For example, as described above, an NR system is used as an example. The second terminal device 120 is a bandwidth-limited terminal, and the first terminal device 110 may be a normal terminal. The first terminal device 110 and the second terminal device 120 have a same capability of reading the broadcast message carried on the physical broadcast channel PBCH and obtaining the first information included in the broadcast message, and content of the obtained first information may be the same or different. However, when the first information is further parsed, both the first terminal device 110 and the second terminal device 120 may parse the RMSI control channel configuration information (namely, the pdcch-ConfigSIB1 information) included in the master information block MIB information in the first information, to obtain control channel PDCCH configuration information for scheduling RMSI, and correspondingly parse, based on the configuration information, the PDCCH to obtain the RMSI information. However, specifically, the first terminal device 110 obtains, through parsing, the RMSI control channel configuration information that corresponds to the first terminal device 110, namely, the configuration information of the first RMSI control channel, and/or the first terminal device 110 obtains, through parsing, the configuration information of the second RMSI control channel. The second terminal device 120 obtains, through parsing, the RMSI control channel configuration information that corresponds to the second terminal device 120, namely, the configuration information of the second RMSI control channel. The configuration information of the first RMSI control channel is different from the configuration information of the second RMSI control channel. It should be noted that the RMSI control channel configuration information may include the configuration information that corresponds to the control channel and that is for scheduling the RMSI.

For example, the first terminal device 110 and the second terminal device 120 may separately parse, based on the configuration information of the first RMSI control channel and the configuration information of the second RMSI control channel that correspond to the first terminal device 110 and the second terminal device 120, control information for scheduling RMSI, and determine, based on the control information, RMSI information carried on a data channel (for example, a PDSCH), so as to successfully access the network device 100. Alternatively, more specifically, the first terminal device 110 and the second terminal device 120 may separately determine, based on the configuration information of the first RMSI control channel and the configuration information of the second RMSI control channel that correspond to the first terminal device 110 and the second terminal device 120, RMSI control channels that correspond to the configuration information of the first RMSI control channel and the configuration information of the second RMSI control channel, parse control information included in the RMSI control channels, determine, based on the control information, corresponding RMSI data channel information, parse information included in the RMSI data channel, and finally determine the RMSI information, so as to successfully access the network device 100. Herein, the RMSI control channel may be a channel including RMSI scheduling information. The RMSI scheduling information may include all or some information required by the terminal device for parsing the RMSI information, or all or some control information required for parsing the information carried on the RMSI data channel.

Optionally, the configuration information of the first RMSI control channel may include but is not limited to at least one of the following information: bandwidth information of the first RMSI control channel, a detection period corresponding to the first RMSI control channel, a detection moment corresponding to the first RMSI control channel, a subcarrier spacing corresponding to the first RMSI control channel, a time domain resource of the first RMSI control channel, and a quantity of times the first RMSI control channel is repeatedly transmitted in the detection period of the first RMSI control channel; and/or the configuration information of the second RMSI control channel may include at least one of the following information: bandwidth information of the second RMSI control channel, a detection period corresponding to the second RMSI control channel, a detection moment corresponding to the second RMSI control channel, a subcarrier spacing corresponding to the second RMSI control channel, a time domain resource of the second RMSI control channel, a quantity of times the second RMSI control channel is repeatedly transmitted in the detection period of the second RMSI control channel, and a frequency domain frequency hopping range of the second RMSI control channel. (1) The bandwidth information of the RMSI control channel may be a bandwidth corresponding to a search space in which the RMSI control channel is located. For example, in the NR system, the bandwidth corresponding to the search space in which the RMSI control channel is located may be represented by a frequency bandwidth corresponding to a CORESET including the RMSI control channel. If the frequency bandwidth corresponding to the CORESET is 20 RBs, it indicates that a frequency resource used to transmit the RMSI control channel falls within a frequency range corresponding to the 20 RBs, and the frequency resource used to transmit the RMSI control channel is not necessarily all frequency resources included in the 20 RBs. The bandwidth information of the RMSI control channel may be represented by using a quantity of RBs, or may be represented by using a value of an absolute bandwidth. This is not specifically limited.

(2) The detection period corresponding to the RMSI control channel may be a detection period for detecting the RMSI control channel by the terminal device, or may be understood as an occurrence period of the search space in which the RMSI control channel is located. The detection period may also be represented by a sending period of the CORESET including the RMSI control channel. For example, the terminal device detects the RMSI control channel once or a plurality of times at a specific time interval. The specific time interval herein may be pre-configured, for example, specified in a protocol, or may be notified by the network device. Specific notification signaling may be broadcast signaling, radio resource control (Radio Resource Control, RRC) signaling, media access control (Media Access Control, MAC) signaling, physical layer signaling, or the like. The specific time interval may be represented by a quantity of OFDM symbols, a quantity of slots (Slot), or the like. This is not specifically limited.

(3) The detection moment corresponding to the RMSI control channel may be understood as a time location at which the terminal device specifically detects the RMSI control channel, or a sending time location of the CORESET including the RMSI control channel, or a time location of the search space in which the RMSI control channel is located. For example, the terminal device detects the RMSI control channel between an $N^{th}$ OFDM symbol and an $M^{th}$ OFDM symbol in one slot, where N and M are integers, and M is not less than N. When N = M, it indicates that the terminal device detects the RMSI control channel on one OFDM symbol in one slot.

(4) The subcarrier spacing corresponding to the RMSI control channel may be understood as a subcarrier spacing corresponding to the frequency resource including the RMSI control channel, a subcarrier spacing corresponding to the CORESET including the RMSI control channel, or a subcarrier spacing corresponding to the search space in which the RMSI control channel is located. For example, the frequency resource including the RMSI control channel is represented by 24 RBs. If the subcarrier spacing corresponding to the RMSI control channel is 15 kHz, and one RB includes 12 subcarriers, it may be understood that the frequency resource including the RMSI control channel is 24 x 12 x 15 kHz. It may be understood that the subcarrier spacing corresponding to the RMSI control channel affects the bandwidth of the RMSI control channel.

(5) The time domain resource of the RMSI control channel may be a time domain resource corresponding to the search space in which the RMSI control channel is located, or a time domain resource corresponding to the CORESET including the RMSI control channel. The time domain resource may be represented by a quantity of OFDM symbols, or may be represented in another form. This is not specifically limited.

(6) The frequency domain frequency hopping range of the RMSI control channel may be represented by using a size of the frequency domain frequency hopping range, for example, by using a quantity of RBs. Within the frequency-domain frequency hopping range, the RMSI control channel may implement frequency hopping based on a preset frequency hopping pattern (Pattern) or a frequency hopping pattern (Pattern) notified by using signaling. Further, optionally, when the information obtained by the terminal device through parsing based on the first information includes the frequency domain frequency hopping range of the RMSI control channel, a bandwidth that corresponds to the terminal device and that is of the RMSI control channel may be pre-configured. For example, a size of the frequency-domain frequency hopping range, of the RMSI control channel, obtained through parsing is 24 RBs, and the bandwidth of the RMSI control channel may be pre-configured as six RBs. In this case, the network device may transmit the RMSI control channel within the range of the 24 RBs based on the frequency hopping pattern.

It should be noted that, although both the configuration information of the first RMSI control channel and the configuration information of the second RMSI control channel include time domain configuration information and frequency domain configuration information, specific content indicated by the configuration information of the first RMSI control channel and the configuration information of the second RMSI control channel is different. Specific time domain information and frequency domain configuration information obtained by different terminal devices through parsing correspond to the different terminal devices, and adapt to capabilities and requirements of the terminal devices. For example, different terminal devices have different requirements for a quantity of times of repeated transmission, a detection period, and the like. For another example, when a transmission bandwidth capability of the first terminal device 110 is greater than a transmission bandwidth capability of the second terminal device 120, the bandwidth of the first RMSI control channel that corresponds to the first RMSI control channel is greater than the bandwidth of the second RMSI control channel.

In addition, different terminal devices parse same configuration information of an RMSI control channel and may obtain different configuration information. For example, because some types of terminal devices have good coverage and do not need to perform repeated transmission, the parsed configuration information does not include a quantity of repeated transmission times.

Optionally, because the first terminal device 110 and the second terminal device 120 have different transmission bandwidth capabilities, the bandwidth information of the first RMSI control channel that is obtained through parsing may be different from the bandwidth information of the second RMSI control channel.

Optionally, if the configuration information of the first RMSI control channel that is obtained by the first terminal device 110 by parsing the first information includes: bandwidth information of the first RMSI control channel, a detection period corresponding to the first RMSI control channel, a detection moment corresponding to the first RMSI control channel, a subcarrier spacing corresponding to the first RMSI control channel, a domain resource of the first RMSI control channel time, and a quantity of times the first RMSI control channel is repeatedly transmitted in a detection period of the first RMSI control channel, but the configuration information of the second RMSI control channel that is obtained by the second terminal device 120 by parsing the first information includes only bandwidth information of the second RMSI control channel, it may be determined that: a detection period corresponding to the second RMSI control channel is equal to the detection period corresponding to the first RMSI control channel; a detection moment corresponding to the second RMSI control channel is equal to the detection moment corresponding to the first RMSI control channel; a subcarrier spacing corresponding to the second RMSI control channel is equal to the subcarrier spacing corresponding to the first RMSI control channel; a time domain resource of the second RMSI control channel is equal to the time domain resource of the first RMSI control channel; and a quantity of times the second RMSI control channel is repeatedly transmitted within the detection period of the second RMSI control channel is equal to the quantity of times the first RMSI control channel is repeatedly transmitted within the detection period of the first RMSI control channel.

Optionally, if the configuration information of the first RMSI control channel that is obtained by the first terminal device 110 by parsing the first information includes: bandwidth information of the first RMSI control channel, a detection period corresponding to the first RMSI control channel, a detection moment corresponding to the first RMSI control channel, a subcarrier spacing corresponding to the first RMSI control channel, a time domain resource for the first RMSI control channel, and a quantity of times the first RMSI control channel is repeatedly transmitted within a detection period of the first RMSI control channel, and the configuration information of the second RMSI control channel that is obtained by the second terminal device 120 by parsing the first information includes bandwidth information of the second RMSI control channel and at least one piece of other control channel configuration information, it may be determined that configuration information that is not obtained by the second terminal device 120 through parsing is equal to corresponding control channel configuration information that is obtained by the first terminal device 110 by parsing the first information.

To be specific, when the second terminal device 120 cannot complete parsing of the control channel configuration information such as the detection period, the detection moment, the subcarrier spacing, and the time domain resource, the configuration information parsed by the first terminal device 110 or another type of terminal device is multiplexed, to ensure that the second terminal device 120 successfully accesses the network device 100. In addition, signaling overheads can be reduced.

The NR system is used as an example, the first terminal device 110 parses an 8-bit RMSI configuration (pdcch-ConfigSIB1, corresponding to the first information in the present invention) included in the MIB, and information (corresponding to the second information in the present invention) obtained through parsing may include: a time-frequency resource corresponding to a common search space including type0-PDCCH (Type0-PDCCH) for scheduling a first RMSI, and a detection moment of detecting the first RMSI control channel. Specifically, the first terminal device 110 may determine a time-frequency resource based on the most significant four bits in the eight bits, and determine a detection moment based on the least significant four bits. In another aspect, the second terminal device 120 may parse the first information by using a similar method, and information (corresponding to the third information in the present invention) obtained through parsing may include: a time-frequency resource corresponding to a common search space including type0-PDCCH (Type0-PDCCH) for scheduling a second RMSI, and a detection moment of detecting the second RMSI control channel.

It should be noted that, in the present invention, if the second RMSI control channel needs to be repeatedly transmitted, the detection moment that corresponds to the second RMSI control channel and that is included in the configuration information of the second RMSI control channel may also be understood as a first detection moment of the second RMSI control channel in a period of repeated transmission.

In a second embodiment of this application, the second information is configuration information that corresponds to the first terminal device 110 and that is of a first remaining minimum system information RMSI control channel. The third information is configuration information that corresponds to the second terminal device 120 and that is of a second remaining minimum system information RMSI data channel.

Specifically, because the first terminal device 110 is a broadband terminal (namely, a normal terminal), the first terminal device 110 may normally parse RMSI control channel configuration information (namely, pdcch-ConfigSIB1 information) included in master information block MIB information in the first information, parse control information for scheduling RMSI, and determines, based on the control information, RMSI information carried on a data channel (for example, a PDSCH), so as to successfully access the network device 100. Alternatively, more specifically, the first terminal device 110 may determine, based on the configuration information of the first RMSI control channel through blind detection, the first RMSI control channel corresponding to the first terminal device 110, parse control information included in the first RMSI control channel, determine, based on the control information, corresponding RMSI data channel information, and parse information included in the RMSI data channel, to finally determine the first RMSI information, so as to successfully access the network device 100.

Because the second terminal device 120 is a broadband-limited terminal, the second terminal device 120 may directly parse the pdcch-ConfigSIB1 information included in the master information block MIB information in the first information, and the second terminal device may directly obtain, based on the information, the configuration information that corresponds to the second terminal device 120 and that is of the second RMSI data channel, namely, control information for scheduling the RMSI data channel, and do not need to parse a PDCCH. It should be noted that the RMSI data channel configuration information may be all or some control information, and the control information is information required for parsing information carried on the RMSI data channel.

In the foregoing manner of parsing the first information by the second terminal device 120, a bandwidth capability requirement on the second terminal device 120 can be reduced, and therefore, it can be ensured that the network device 100 can also serve a terminal device such as a limited bandwidth. In addition, the second terminal device 120 needs to repeatedly receive, due to a CE requirement and/or a limited bandwidth capability, information sent by the network device, to ensure normal data transmission between the second terminal device 120 and the network device. In the foregoing manner, the second terminal device 120 may directly obtain the RMSI data channel configuration information by parsing the first information, determine the RMSI, and do not need to repeatedly receive the PDCCH including the RMSI data channel configuration information. Therefore, a delay and system overheads caused by repeated transmission can be compensated for.

Optionally, the configuration information of the first RMSI control channel may include but is not limited to at least one of the following information: bandwidth information of the first RMSI control channel, a detection period corresponding to the first RMSI control channel, a detection moment corresponding to the first RMSI control channel, a subcarrier spacing corresponding to the first RMSI control channel, a time domain resource of the first RMSI control channel, and a quantity of times the first RMSI control channel is repeatedly transmitted in a detection period of the first RMSI control channel; and/or the configuration information of the second RMSI data channel may include but is not limited to at least one of the following information: bandwidth information of the second RMSI data channel, a detection period corresponding to the second RMSI data channel, a detection moment corresponding to the second RMSI data channel, a subcarrier spacing corresponding to the second RMSI data channel, a time domain resource of the second RMSI data channel, a quantity of times the second RMSI data channel is repeatedly transmitted in the detection period of the second RMSI data channel, a transport block size (Transmission Block Size, TBS) corresponding to the second RMSI data channel, a modulation and coding scheme (Modulation Coding Scheme, MCS) corresponding to the second RMSI data channel, and a frequency domain frequency hopping range of the second RMSI data channel. The bandwidth information of the RMSI control channel may be a bandwidth corresponding to a search space in which the RMSI control channel is located. Herein, the detection period, the detection moment, and the subcarrier spacing that correspond to the data channel may be understood as a period in which the terminal device detects the data channel, a detection moment, and a subcarrier spacing corresponding to a frequency resource corresponding to the data channel. The TBS and the MCS that correspond to the data channel may be understood as a TBS and an MCS that are used by the network device to transmit information carried on the data channel.

For descriptions of information such as the bandwidth information of the RMSI control channel and the detection period corresponding to the RMSI control channel that are included in the RMSI control channel configuration information, refer to the foregoing explanations. In addition, for explanations of various types of information included in the RMSI data channel configuration information, refer to the foregoing explanations of various types of information included in the RMSI control channel configuration information. Details are not described herein again.

Similarly, although both the configuration information of the first RMSI control channel and the configuration information of the second RMSI data channel include the bandwidth information, the detection period, the detection moment, the subcarrier spacing, and time-domain resource configuration information, specific content indicated by the configuration information of the first RMSI control channel and specific content indicated by the configuration information of the second RMSI data channel are different. The former is related configuration information of the control channel, and the latter is related configuration information of the data channel. In addition, as described above, the two pieces of configuration information have completely different parsing methods and parsing processes, and this is determined by the terminal device based on a specific hardware condition, a software condition, an application requirement, an application scenario, and the like of the terminal device.

Optionally, the bandwidth information of the first RMSI control channel may be different from the bandwidth information of the second RMSI data channel.

The NR system is used as an example, the first terminal device 110 parses an 8-bit RMSI configuration (pdcch-ConfigSIB1, corresponding to the first information in the present invention) included in the MIB, and information (corresponding to the second information in the present invention) obtained through parsing may include: a time-frequency resource corresponding to a common search space including type0-PDCCH (Type0-PDCCH) for scheduling a first RMSI, and a detection moment of detecting the first RMSI control channel. Specifically, the first terminal device 110 may determine a time-frequency resource based on the most significant four bits in the eight bits, and determine a detection moment based on the least significant four bits. In another aspect, the second terminal device 120 parses the 8-bit RMSI configuration (pdcch-ConfigSIB1, corresponding to the first information in the present invention) included in the MIB, and information (corresponding to the third information in the present invention) obtained through parsing may include a time-frequency resource corresponding to the second RMSI data channel, and a detection moment of detecting the second RMSI data channel.

More specifically, in the current NR system, the network device indicates, by using 4 bits of 8-bit pdcch-ConfigSIB1 information, the following information: a multiplexing mode between an SSB and a control resource set CORESET in which the first RMSI control channel is located, bandwidth information (for example, indicated by a quantity of RBs) of the first RMSI control channel, a time domain resource (for example, indicated by a quantity of OFDM symbols) of the first RMSI control channel, and a frequency domain resource of the first RMSI control channel. The frequency domain resource of the first RMSI control channel is represented by using the bandwidth information of the first RMSI control channel and a frequency offset A. The frequency offset A may be understood as an offset between the frequency domain resource of the first RMSI control channel and an SSB frequency domain resource, and the SSB may be an SSB associated with the first RMSI, for example, an SSB that has a same transmit beam direction as the first RMSI. The second terminal device 120 may determine, based on indication information (which may correspond to a part of first information in the present invention, and the first information herein is understood as pdcch-ConfigSIB1) corresponding to a frequency domain resource of the first RMSI control channel, a frequency domain resource corresponding to the frequency domain frequency hopping range of the second RMSI data channel. Within the frequency domain frequency hopping range, the network device may implement frequency hopping transmission for the second RMSI data channel based on a specific frequency hopping pattern. The bandwidth of the second RMSI data channel may be pre-configured. Optionally, herein, there is a frequency offset B between the frequency domain resource that corresponds to the frequency domain frequency hopping range of the second RMSI data channel and that is determined by the second terminal device 120 and the frequency domain resource of the first RMSI control channel. A value of the frequency offset B may be the same as or different from the value of the frequency offset A. This is not specifically limited. In the present invention, a frequency offset between a frequency domain resource A and the frequency domain resource B may be represented by using a highest frequency corresponding to the frequency domain resource A and a highest frequency corresponding to the frequency domain resource B, or may be represented by using a lowest frequency corresponding to the frequency domain resource A and a lowest frequency corresponding to the frequency domain resource B, or may be represented in another manner. This is not specifically limited. The highest frequency may be represented by an RB including the highest frequency, and the lowest frequency may be represented by an RB including the highest frequency. It should be noted that, in the present invention, if the lowest frequency or the highest frequency corresponding to the determined frequency domain resource exceeds a lowest frequency or a highest frequency corresponding to a transmission bandwidth of the network device, the terminal device may perform cyclic extension on the determined frequency domain resource within the transmission bandwidth of the network device. It is assumed that an RB is used to represent the transmission bandwidth of the network device and the determined frequency domain resource. If a minimum RB corresponding to the transmission bandwidth of the network device is an RB 1 and a maximum RB is an RB 100, in other words, the transmission bandwidth of the network device includes 100 RBs, the RB 1 corresponds to an RB including a low frequency, and the RB 100 corresponds to an RB including a high frequency, and if an RB range corresponding to the frequency domain resource of the first RMSI control channel is from an RB 91 to an RB 95, and the frequency offset B is six RBs, the frequency domain resources corresponding to the frequency domain frequency hopping range of the second RMSI data channel may be an RB 96 to an RB 101. Because the RB range corresponding to the transmission bandwidth of the network device is from the RB 1 to the RB 100, it may be determined that the frequency domain resources corresponding to the frequency domain frequency hopping range of the second RMSI data channel are from the RB 96 to the RB 100 and the RB 1. In another aspect, in the current NR system, the network device indicates, by using the other four bits of the 8-bit pdcch-ConfigSIB 1 information, the following information: the detection moment of the first RMSI control channel. The second terminal device 120 may determine the transmission moment of the second RMSI data channel based on indication information (which may be corresponding to a part of the first information in the present invention, and the first information herein is understood as pdcch-ConfigSIB1) corresponding to the detection moment of the first RMSI control channel. More specifically, if the second RMSI data channel needs to be repeatedly transmitted, the foregoing determined transmission moment of the second RMSI data channel may be understood as a first transmission moment of the second RMSI data channel in the repetition transmission period.

In a third example not forming part of the invention, the second information is configuration information that corresponds to the first terminal device 110 and that is of a first remaining minimum system information RMSI control channel. The third information is second RMSI information corresponding to the second terminal device 120.

Specifically, pdcch-ConfigSIB1 information included in master information block MIB information in the first information is directly associated with the second RMSI information. Therefore, the second terminal device 120 may directly associate with the second RMSI information by parsing the information. For example, the pdcch-ConfigSIB1 information is 8-bit information, and therefore, 256 types of RMSI information may be associated. Similarly, the first terminal device 110 may also obtain, by using a same parsing method as the second terminal device 120, the RMSI information corresponding to the second terminal device.

In comparison with the method in which PDSCH configuration information carrying the RMSI is directly associated by parsing the MIB information, in the foregoing parsing method, the PDSCH may not be parsed, in other words, the data channel configuration information does not need to be parsed, and the RMSI information is directly obtained by parsing the MIB information. Therefore, a lower latency of accessing a network device by the terminal device and lower channel overheads of a control channel and a data channel can be implemented in the same time.

In a fourth embodiment of this application, the second information is configuration information that corresponds to the first terminal device 110 and that is of a first initial active bandwidth part BWP, and the third information is configuration information that corresponds to the second terminal device 120 and that is of a second initial active bandwidth part BWP.

The BWP configuration information may include at least one of the following: a frequency domain resource corresponding to the BWP, a subcarrier spacing corresponding to the BWP, and the like.

It should be noted that, in the present invention, the initial active BWP may be understood as a frequency range of data transmission between the terminal device and the network device before the terminal device enters a connected mode. After entering the connected mode, the terminal device may transmit data in the frequency domain range corresponding to the initial active BWP, or may transmit data in a frequency domain range corresponding to another BWP notified by the network device 100 by using RRC signaling. For a terminal device with a relatively low bandwidth capability (which may be specifically understood as the second terminal device 120 in this embodiment), the third information may also be understood as a frequency domain frequency hopping range that corresponds to the second terminal device 120 and that is of the second initial active BWP.

For example, the NR system is still used as an example. The network device 100 indicates the following information by using four bits in 8-bit pdcch-ConfigSIB1 information: a multiplexing mode between an SSB and a control resource set CORESET in which the first RMSI control channel is located, bandwidth information of the first RMSI control channel (for example, indicated by a quantity of RBs), a time domain resource of the first RMSI control channel (for example, indicated by a quantity of OFDM symbols), and a frequency domain resource of the first RMSI control channel, where the frequency domain resource of the first RMSI control channel may be understood as a frequency domain resource corresponding to the first initially activated BWP. The second terminal device 120 may determine a frequency domain frequency hopping range of the second initial active BWP based on indication information (which may correspond to a part of the first information in the present invention, and the first information is understood as pdcch-ConfigSIB1 herein) corresponding to the frequency domain resource of the first RMSI control channel.

Optionally, when the third information includes the frequency domain frequency hopping range of the second initial active BWP, a frequency domain bandwidth corresponding to the second initial active BWP may be pre-configured, for example, may be six RBs. Optionally, a bandwidth corresponding to the first initial active BWP is different from a bandwidth corresponding to the second initial active BWP. The initial active BWP may be understood as a frequency domain range corresponding to data transmission between the terminal device and the network device 100 when the terminal device does not enter a connected mode. Therefore, different types of terminal devices may communicate with the network device in different initial active BWPs by using the first information, and the network device 100 may adaptively design control channel bandwidth information based on transmission bandwidth capabilities of the different types of terminal devices, to optimize system resource usage efficiency.

For any one of the foregoing embodiments, further optionally, because the network device 100 does not support access of some types of terminal devices, the first information sent by the network device 100 may further include fourth information, and the fourth information is used to forbid the first terminal device 110 or the second terminal device 120 to access the network device. In other words, an MIB sent by the network device 100 may include the fourth information. The fourth information may be 1 bit, that is, 0 or 1, where 0 may represent that access is allowed, and 1 may represent that access is forbidden.

Optionally, remaining (spare) bits included in the MIB in the first information sent by the network device 100 may be used to represent the fourth information.

Optionally, bits included in a broadcast message sent by the network device 100, for example, remaining (spare) bits, may be used to represent the fourth information.

Optionally, the fourth information may be determined based on type information of an allowed access device that is stored in the network device. The type information of the allowed access device may be stored in the network device in a form of a list, or may be stored in the network device in another form. This is not limited in this application. The following Table 2 is used as an example in a form of a list. Table 2 is merely used as an example, and specific content and an expression form of the list are not limited.

**Table 2**

| Device identification code | Whether access is allowed |
|---|---|
| 35380000111123/1 | Yes |
| 35380000111144/2 | Yes |
| 35380000111125/13 | No |

The broadcast message is oriented to all terminal devices camping on the cell. Therefore, if the network device 100 does not support access of some types of terminal devices, but these terminal devices do not know that the terminals cannot perform access, the terminal devices continuously parse the first information after receiving the first information, to obtain the configuration information that is for accessing the network device, and continuously attempt to request to access the network device 100. Therefore, unnecessary information is parsed to request to access the network device 100, and unnecessary power consumption is caused. After receiving the first information, if the terminal device finds, through parsing, that the first information includes the fourth information, the terminal device stops further information parsing.

The second terminal device 120 is used as an example. It is assumed that the second terminal device 120 is a terminal device with a limited bandwidth capability. Because two types of terminal devices have a same capability of parsing the first information, the two types of terminal devices both obtain, based on the first information, configuration information that corresponds to the two types of terminal devices and that is for accessing the network device 100. If the network device 100 does not support access of the second terminal device 120, when there is no fourth information, the second terminal device 120 attempts to further parse a system message based on the configuration information that corresponds to the second terminal device 120 and that is for accessing the network device 100. Therefore, power consumption is caused. The fourth information may help reduce power consumption.

FIG. 5 is a flowchart 2 of a data transmission method according to an embodiment of this application. The method is applied to any terminal device, for example, a first terminal device 110 and a second terminal device 120. The method may include the following steps.

501: A terminal device receives first information from a network device.

The terminal device may be the first terminal device 110 and/or the second terminal device 120. The first terminal device 110 and the second terminal device 120 have different transmission bandwidth capabilities. The terminal device may alternatively be any other type of terminal device. In this embodiment, the first terminal device 110 and the second terminal device 120 are used as an example to describe the method. For a data transmission method of another type of terminal device, refer to the method provided in this embodiment.

If the terminal device is the first terminal device 110, the first information is used by the first terminal device 110 to parse the first information to obtain second information, where the second information is configuration information that corresponds to the first terminal device 110 and that is for accessing the network device. If the terminal device is the second terminal device 120, the first information is used by the second terminal device 120 to parse the first information to obtain third information, where the third information is configuration information that corresponds to the second terminal device 120 and that is for accessing the network device.

In some embodiments of this application, the first terminal device 110 and the second terminal device 120 may receive, by using a physical broadcast channel PBCH, a broadcast message that is sent by the network device 100 and that carries the first information, where the first information is configuration information, namely, pdcch-ConfigSIB1 information, that is of an RMSI control channel and that is included in master information block MIB information. The RMSI control channel configuration information may include but is not limited to at least one of the following: a multiplexing pattern (multiplexing pattern) between an SSB and a control resource set CORESET in which the RMSI control channel is located, where the multiplexing pattern may include time division multiplexing (Time Division Multiplexing, TDM), frequency division multiplexing (Frequency Division Multiplexing, FDM), and code division multiplexing (Code Division Multiplexing, CDM); a quantity of resource blocks corresponding to the CORESET in which the RMSI control channel is located; a quantity of symbols corresponding to the CORESET in which the RMSI control channel is located; a frequency offset required for determining the CORESET; a monitoring occasion (monitoring occasions) of the RMSI control channel; and the like.

For explanations of different transmission bandwidth capabilities, refer to the foregoing descriptions. Details are not described again.

It should be noted that different transmission bandwidth capabilities determine different information content obtained by different types of terminal devices by parsing same pdcch-ConfigSIB1 information. For example, for same 8-bit information, the first terminal device 110 obtains a meaning 1 through parsing, and the second terminal device 120 obtains a meaning 2 through parsing.

Similarly, "correspond to" means that the configuration information for accessing the network device 100 is configuration information designed for the first terminal device 110 or the second terminal device 120 to access the network device 100. In other words, the first terminal device 110 or the second terminal device 120 may determine, based on the configuration information, the configuration information for accessing the network device. A specific type of configuration information that is parsed out by the terminal device based on the first information depends on a specific case of the terminal device, for example, a transmission bandwidth capability or a maximum quantity of times of repeated transmission. More generally, the different types of terminal devices may parse, based on the same first information, out different configuration information that matches the types of the terminal devices.

502: The first terminal device 110 and/or the second terminal device 120 access/accesses the network device 100 based on the first information.

Specifically, the first terminal device 110 and/or the second terminal device 120 obtain/obtains, by parsing the first information, configuration information such as time domain/frequency domain information for accessing the network device 100, so that when determining that the network device 100 needs to be accessed, the first terminal device 110 and/or the second terminal device 120 successfully access/accesses the network device 100 based on the obtained configuration information.

In a fifth example not forming part of the invention, the second information is configuration information that corresponds to the first terminal device 110 and that is of a first remaining minimum system information RMSI control channel. The third information is configuration information that corresponds to the second terminal device 120 and that is of a second remaining minimum system information RMSI control channel.

Specifically, for example, in an NR system, the second terminal device 120 is a bandwidth-limited terminal, and the first terminal device 110 is a normal terminal. Step 502 may include the following steps.

1.1: The first terminal device 110 and/or the second terminal device 120 receive/receives a broadcast message from a physical broadcast channel PBCH, to obtain some fields, namely, the first information, in the broadcast message, where the first information includes master information block MIB information, and the MIB information includes RMSI control channel configuration information (namely, pdcch-ConfigSIB1 information).

1.2: The first terminal device 110 and/or the second terminal device 120 parse/parses the pdcch-ConfigSIB1 information to obtain control channel PDCCH configuration information that is for scheduling RMSI.

1.3: The first terminal device 110 and/or the second terminal device 120 parse/parses, based on the corresponding control channel PDCCH configuration information that is for scheduling the RMSI and that is parsed out by the first terminal device 110 and/or the second terminal device 120, control information for scheduling the RMSI.

1.4: The first terminal device 110 and/or the second terminal device 120 determine/determines, based on the control information for scheduling the RMSI, RMSI information carried on a data channel (for example, a PDSCH), to successfully access the network device 100.

Optionally, step 1.3 may alternatively be: The first terminal device 110 and/or the second terminal device 120 determine/determines, based on the corresponding control channel PDCCH configuration information that is for scheduling the RMSI and that is parsed out by the first terminal device 110 and/or the second terminal device 120, RMSI control channels/an RMSI control channel corresponding to the first terminal device 110 and/or the second terminal device 120.

Step 1.4 may alternatively be: The first terminal device 110 and/or the second terminal device 120 parse/parses control information included in the RMSI control channels/RMSI control channel corresponding to the first terminal device 110 and/or the second terminal device 120.

Step 502 may further include 1.5:

The first terminal device 110 and/or the second terminal device 120 determine/determines corresponding RMSI data channel configuration information based on the control information corresponding to the first terminal device 110 and/or the second terminal device 120, and parse/parses information included in the RMSI data channel corresponding to the first terminal device 110 and/or the second terminal device 120, to finally determine RMSI information and successfully access the network device 100.

It should be noted that the configuration information of the first RMSI control channel that is obtained by the first terminal device 110 is different from the configuration information of the second RMSI control channel that is obtained by the second terminal device 120.

Optionally, the configuration information of the first RMSI control channel may include but is not limited to at least one of the following information: bandwidth information of the first RMSI control channel, a detection period corresponding to the first RMSI control channel, a detection moment corresponding to the first RMSI control channel, a subcarrier spacing corresponding to the first RMSI control channel, a time domain resource of the first RMSI control channel, and a quantity of times the first RMSI control channel is repeatedly transmitted in the detection period of the first RMSI control channel; and/or the configuration information of the second RMSI control channel may include at least one of the following information: bandwidth information of the second RMSI control channel, a detection period corresponding to the second RMSI control channel, a detection moment corresponding to the second RMSI control channel, a subcarrier spacing corresponding to the second RMSI control channel, a time domain resource of the second RMSI control channel, a quantity of times the second RMSI control channel is repeatedly transmitted in the detection period of the second RMSI control channel, and a frequency domain frequency hopping range of the second RMSI control channel.

For descriptions of information such as the bandwidth information of the RMSI control channel and the detection period corresponding to the RMSI control channel that are included in the RMSI control channel configuration information, refer to the foregoing explanations. Details are not described herein again.

It should be noted that, although both the configuration information of the first RMSI control channel and the configuration information of the second RMSI control channel include time domain configuration information and frequency domain configuration information, specific content indicated by the configuration information of the first RMSI control channel and the configuration information of the second RMSI control channel is different. Specific time domain configuration information and specific frequency domain configuration information that are obtained by different terminal devices through parsing are customized for the terminal devices, to adapt to capabilities and requirements of the terminal devices.

For example, a quantity of times that the first RMSI control channel is repeatedly transmitted in the detection period of the first RMSI control channel and that is obtained by the first terminal device 110 by parsing the first information may be greater than a quantity of times that the second RMSI control channel is repeatedly transmitted in the detection period of the second RMSI control channel and that is obtained by the second terminal device 120 by parsing the first information.

For another example, a specific detection period corresponding to the first RMSI control channel may be different from a specific detection period corresponding to the second RMSI control channel.

In addition, the different terminal devices obtain different configuration information by parsing the same RMSI control channel configuration information.

For example, because the second terminal device 120 has a coverage enhancement requirement, energy superposition needs to be performed in a repeated transmission manner to enhance coverage, to ensure reliable information transmission. Therefore, the configuration information of the second RMSI control channel that is obtained by the second terminal device 120 by parsing the first information may include the quantity of times the second RMSI control channel is repeatedly transmitted. But the configuration information of the first RMSI control channel that is obtained by the first terminal device 110 by parsing the first information may not include the quantity of times the first RMSI control channel is repeatedly transmitted. In other words, the first terminal device 110 does not need to perform repeated transmission.

Optionally, because the first terminal device 110 and the second terminal device 120 have different transmission bandwidth capabilities, the bandwidth information of the first RMSI control channel that is obtained through parsing may be different from the bandwidth information of the second RMSI control channel.

Optionally, if the configuration information of the first RMSI control channel that is obtained by the first terminal device 110 by parsing the first information includes bandwidth information of the first RMSI control channel, a detection period corresponding to the first RMSI control channel, a detection moment corresponding to the first RMSI control channel, a subcarrier spacing corresponding to the first RMSI control channel, a domain resource of the first RMSI control channel time, and a quantity of times the first RMSI control channel is repeatedly transmitted in a detection period of the first RMSI control channel, but the configuration information of the second RMSI control channel that is obtained by the second terminal device 120 by parsing the first information includes only bandwidth information of the second RMSI control channel, it may be determined that: a detection period corresponding to the second RMSI control channel is equal to the detection period corresponding to the first RMSI control channel; a detection moment corresponding to the second RMSI control channel is equal to the detection moment corresponding to the first RMSI control channel; a subcarrier spacing corresponding to the second RMSI control channel is equal to the subcarrier spacing corresponding to the first RMSI control channel; a time domain resource of the second RMSI control channel is equal to the time domain resource of the first RMSI control channel; and a quantity of times the second RMSI control channel is repeatedly transmitted within the detection period of the second RMSI control channel is equal to the quantity of times the first RMSI control channel is repeatedly transmitted within the detection period of the first RMSI control channel.

Optionally, if the configuration information of the first RMSI control channel that is obtained by the first terminal device 110 by parsing the first information includes bandwidth information of the first RMSI control channel, a detection period corresponding to the first RMSI control channel, a detection moment corresponding to the first RMSI control channel, a subcarrier spacing corresponding to the first RMSI control channel, a time domain resource for the first RMSI control channel, and a quantity of times the first RMSI control channel is repeatedly transmitted within a detection period of the first RMSI control channel, and the configuration information of the second RMSI control channel that is obtained by the second terminal device 120 by parsing the first information includes bandwidth information of the second RMSI control channel and at least one piece of other control channel configuration information, it may be determined that configuration information that is not obtained by the second terminal device 120 through parsing is equal to corresponding control channel configuration information that is obtained by the first terminal device 110 by parsing the first information.

For example, the second terminal device 120 is a bandwidth-limited terminal. After the second terminal device 120 parses the first information to obtain the bandwidth information that corresponds to the second terminal device 120 and that is of the second RMSI control channel, although other configuration information of the control channel such as a detection period, a detection moment, a subcarrier spacing, and a time domain resource is not parsed, the second terminal device 120 may successfully access the network device 100. In this case, the corresponding control channel configuration information that is obtained by the first terminal device 110 through parsing may be multiplexed. For another example, the second terminal device 120 parses the first information to obtain the bandwidth information that corresponds to the second terminal device 120 and that is of the second RMSI control channel and the quantity of times the first RMSI control channel is repeatedly transmitted in the detection period of the first RMSI control channel, and does not obtain other configuration information through parsing. In this case, the configuration information of the control channel such as the detection period, the detection moment, the subcarrier spacing, and the time domain resource that are obtained by the first terminal device 110 through parsing may be multiplexed, to successfully access the network device 100.

The NR system is used as an example, the first terminal device 110 parses an 8-bit RMSI configuration (pdcch-ConfigSIB1, corresponding to the first information in the present invention) included in the MIB, and information (corresponding to the second information in the present invention) obtained through parsing may include: a time-frequency resource corresponding to a common search space including type0-PDCCH (Type0-PDCCH) for scheduling a first RMSI, and a detection moment of detecting the first RMSI control channel. Specifically, the first terminal device 110 may determine a time-frequency resource based on the most significant four bits in the eight bits, and determine a detection moment based on the least significant four bits. In another aspect, the second terminal device 120 may parse the first information by using a similar method, and information (corresponding to the third information in the present invention) obtained through parsing may include: a time-frequency resource corresponding to a common search space including type0-PDCCH (Type0-PDCCH) for scheduling a second RMSI, and a detection moment of detecting the second RMSI control channel.

For example, an NR system is used as an example. It is assumed that subcarrier spacings corresponding to control channels on which the SSB and the RMSI are located are both 30 kHz, the first terminal device 110 parses an 8-bit RMSI configuration (pdcch-ConfigSIB1, corresponding to the first information in the present invention) included in the MIB, four bits (for example, four most significant bits) correspond to values in a first column in the following Table 3. In other words, 0000 to 1111 respectively correspond to 0 to 15 in the first column. The other four bits (for example, four least significant bits) correspond to values in a first column in the following Table 4. In other words, 0000 to 1111 respectively correspond to 0 to 15 in the first column. Another column in Table 3 may be used to determine a frequency domain resource (which may also be a time-frequency resource) of a control resource set CORESET in which the first RMSI control channel is located and a multiplexing mode between the control resource set CORESET and the SSB. Another column in Table 4 may be used to determine a time detection location (or may be a detection moment) of the first RMSI control channel.

**Table 3**

| Index Index | Multiplexing mode of an SSB and a CORESET | Number $N_{\mathrm{RB}}^{\mathrm{CORESET}}$ of RBs used for a CORESET | Number $N_{\mathrm{symb}}^{\mathrm{CORESET}}$ of symbols used for a CORESET | Frequency domain offset Offset (RBs) |
|---|---|---|---|---|
| 0 | 1 | 24 | 2 | 0 |
| 1 | 1 | 24 | 2 | 1 |
| 2 | 1 | 24 | 2 | 2 |
| 3 | 1 | 24 | 2 | 3 |
| 4 | 1 | 24 | 2 | 4 |
| 5 | 1 | 24 | 3 | 0 |
| 6 | 1 | 24 | 3 | 1 |
| 7 | 1 | 24 | 3 | 2 |
| 8 | 1 | 24 | 3 | 3 |
| 9 | 1 | 24 | 3 | 4 |
| 10 | 1 | 48 | 1 | 12 |
| 11 | 1 | 48 | 1 | 14 |
| 12 | 1 | 48 | 1 | 16 |
| 13 | 1 | 48 | 2 | 12 |

(continued)

| Index Index | Multiplexing mode of an SSB and a CORESET | Number $N_{RB}^{CORESET}$ of RBs used for a CORESET | Number $N_{symb}^{CORESET}$ of symbols used for a CORESET | Frequency domain offset Offset (RBs) |
|---|---|---|---|---|
| 14 | 1 | 48 | 2 | 14 |
| 15 | 1 | 48 | 2 | 16 |

**Table 4**

| Index Index | Parameter O | Quantity of search spaces included in each slot slot | Parameter M | First symbol index |
|---|---|---|---|---|
| 0 | 0 | 1 | 1 | 0 |
| 1 | 0 | 2 | 1/2 | {0, if $i$ is even}, { $N_{symb}^{CORESET}$ , if $i$ is odd} |
| 2 | 2 | 1 | 1 | 0 |
| 3 | 2 | 2 | 1/2 | {0, if $i$ is even}, { $N_{symb}^{CORESET}$ , if $i$ is odd} |
| 4 | 5 | 1 | 1 | 0 |
| 5 | 5 | 2 | 1/2 | {0, if $i$ is even}, { $N_{symb}^{CORESET}$ , if $i$ is odd} |
| 6 | 7 | 1 | 1 | 0 |
| 7 | 7 | 2 | 1/2 | {0, if $i$ is even}, { $N_{symb}^{CORESET}$ , if $i$ is odd} |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |
| 15 | 5 | 1 | 1 | 2 |

It is now assumed that a value of pdcch-ConfigSIB1 included in the MIB is 00010000, and the first terminal device may determine, based on Table 3 and a value of 0001, the frequency domain resource of the control resource set CORESET in which the first RMSI control channel is located and the multiplexing mode between the CORESET and the SSB, which are shown in Table 5 (that is, corresponding to a row corresponding to index = 1 in Table 3), and may determine, based on Table 4 and a value of 0000, the time detection location of the first RMSI control channel, which is shown in Table 6 (that is, corresponding to a row corresponding to index = 0 in Table 4). It may be understood that a bandwidth corresponding to the control resource set CORESET in which the first RMSI control channel is located is 24 x 12 x 30 kHz = 8.64 MHz.

**Table 5**

| Index Index | Multiplexing mode of an SSB and a CORESET | Number $N_{RB}^{CORESET}$ of RBs used for a CORESET | Number $N_{symb}^{CORESET}$ of symbols used for a CORESET | Frequency domain offset Offset (RBs) |
|---|---|---|---|---|
| 1 | 1 | 24 | 2 | 1 |

**Table 6**

| Index Index | Parameter $O$ | Quantity of search spaces included in each slot slot | Parameter $M$ | First symbol index |
|---|---|---|---|---|
| 0 | 0 | 1 | 1 | 0 |

For the second terminal device, if the data transmission bandwidth capability of the second terminal device is not less than 8.64 MHz or not less than 10 MHz, the second terminal device parses out, based on the four most significant bits 0001 in pdcch-ConfigSIB1 (corresponding to the first information in the present invention), a frequency domain resource of a control resource set CORESET in which the second RMSI control channel is located and a multiplexing mode between the control resource set CORESET and an SSB, which may be shown in Table 5. Based on the four least significant bits 0000 in pdcch-ConfigSIB 1 (corresponding to the first information in the present invention), a parsed time detection location of the second RMSI control channel may be shown in Table 6, or a time offset may be introduced on the basis of Table 6. The time offset may be a slot offset or a symbol offset, and may represent a time offset between the time detection position of the first RMSI control channel and the time detection position of the second RMSI control channel.

It is now assumed that a value of pdcch-ConfigSIB1 included in the MIB is 11010000, and the first terminal device may determine, based on Table 3 and a value of 1101, the frequency domain resource of the control resource set CORESET in which the first RMSI control channel is located and the multiplexing mode between the CORESET and the SSB, which are shown in Table 7 (that is, corresponding to a row corresponding to index = 1 in Table 3), and may determine, based on Table 4 and a value of 0000, the time detection location of the first RMSI control channel, which is shown in Table 6 (that is, corresponding to a row corresponding to index = 0 in Table 4). It may be understood that a bandwidth corresponding to the control resource set CORESET in which the first RMSI control channel is located is 48 x 12 x 30 kHz = 17.28 MHz.

**Table 7**

| Index | SS/PBCH block and CORESET multiplexing pattern | Number of RBs CORESET $N_{RB}^{CORESET}$ | Number of Symbols $N_{symb}^{CORESET}$ | Offset (RBs) |
|---|---|---|---|---|
| 13 | 1 | 48 | 2 | 12 |

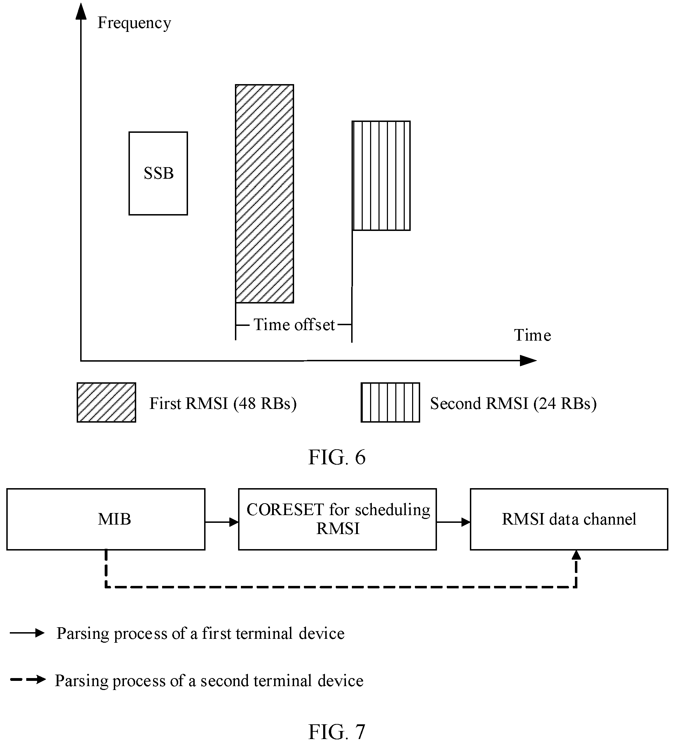

For the second terminal device, it is assumed that the data transmission bandwidth capability of the second terminal device is 10 MHz or less than 17.28 MHz, the second terminal device parses out, based on Table 3 and the four most significant bits 1101 in pdech-ConfigSIB1 (corresponding to the first information in the present invention), a frequency domain resource of the control resource set CORESET in which the second RMSI control channel is located and a multiplexing mode between the control resource set CORESET and the SSB, which may be shown in Table 8 (that is, corresponding to a row corresponding to index = 3 in Table 3). Based on the four least significant bits 0000 in pdcch-ConfigSIB 1 (corresponding to the first information in the present invention), the parsed time detection location of the second RMSI control channel may be shown in Table 6 (that is, corresponding to the row corresponding to index = 0 in Table 4), or a time offset may be introduced on the basis of Table 4. The time offset may be a slot offset or a symbol offset, and may represent a time offset between the time detection position of the first RMSI control channel and the time detection position of the second RMSI control channel. FIG. 6 shows an example of a distribution manner of a control resource set CORESET (corresponding to the first RMSI in the figure) in which the first RMSI control channel is located and a control resource set CORESET (corresponding to the second RMSI in the figure) in which the second RMSI control channel is located. A bandwidth corresponding to the first RMSI is 48 RBs, a bandwidth corresponding to the second RMSI is 24 RBs, and there is a time offset between a time detection location corresponding to the first RMSI and a time detection location corresponding to the second RMSI. In the figure, an example in which one SSB corresponds to the first RMSI and the second RMSI is used for description. For ease of description, a structure including the SSB, the first RMSI corresponding to the SSB, and the second RMSI corresponding to the SSB in the figure is referred to as a unit. It may be understood that: The unit may appear in a specific period, and there may be a plurality of units in the period. Each unit may correspond to a different beam direction, or may correspond to a different beam direction. This is not specifically limited. In the figure, the first RMSI corresponding to the SSB and the second RMSI corresponding to the SSB may correspond to the same beam direction. It should be noted that first RMSI corresponding to one SSB may be understood as the first RMSI that may be determined by the first terminal device based on information carried on a PBCH included in the SSB, and second RMSI corresponding to one SSB may be understood as the second RMSI that may be determined by the second terminal device based on information carried on a PBCH included in the SSB.

**Table 8**

| Index | SS/PBCH block and CORESET multiplexing pattern | Number of RBs CORESET $N_{\mathrm{RB}}^{\mathrm{CORESET}}$ | Number of Symbols $N_{\mathrm{symb}}^{\mathrm{CORESET}}$ | Offset (RBs) |
|---|---|---|---|---|
| 3 | 1 | 24 | 2 | 3 |

It should be noted that, in the present invention, both the first terminal device and the second terminal device may parse the first information. Therefore, it may be understood that the first terminal device may also obtain the third information, and the second terminal device may also obtain the second information. Therefore, in the present invention, optionally, if a transmission bandwidth (or understood as a frequency domain resource) corresponding to the second information is not greater than the data transmission bandwidth capability of the second terminal device (for example, the narrowband terminal device), it may be considered that the second information is the same as the third information. In other words, the second information is the third information, for example, the first RMSI control channel is the second RMSI control channel, and/or the first RMSI data channel is the second RMSI data channel. In another aspect, if the transmission bandwidth corresponding to the second information is greater than the data transmission bandwidth capability of the second terminal device, even if the second terminal device can obtain the second information, the second terminal device cannot use the second information to transmit data with the network device due to a limitation of the data transmission bandwidth capability. In this case, the second terminal device needs to parse the third information by using the first information, and transmit data with the network device by using the third information. For example, in the foregoing example, it is assumed that a value of pdcch-ConfigSIB1 is 00010000, subcarrier spacings corresponding to control channels on which the SSB and the RMSI are located are both 30 kHz, and the bandwidth capability of the second terminal device is 10 MHz, the third information determined by the second terminal device based on pdcch-ConfigSIB1 may be the same as the second information determined by the first terminal device based on pdcch-ConfigSIB1. In another aspect, for another example, in the foregoing example, it is assumed that a value of pdcch-ConfigSIB1 is 11010000, subcarrier spacings corresponding to control channels on which the SSB and the RMSI are located are both 30 kHz, and the bandwidth capability of the second terminal device is 10 MHz, the third information determined by the second terminal device based on pdcch-ConfigSIB1 is different from the second information determined by the first terminal device based on pdcch-ConfigSIB1.

In the present invention, for the PBCH sent by the network device, different terminal devices may parse out different information (corresponding to the second information and the third information in the present invention). Therefore, it may be understood that the PBCH sent by the network device has at least two meanings. For example, the PBCH in the present invention may be understood as a dual-meaning PBCH.

It should be noted that the foregoing parsing manner is also applicable to a case in which the third information is the configuration information of the second RMSI data channel. For example, the second terminal device may determine the configuration information of the second RMSI data channel based on the first information, Table 3, and Table 4.

It should be noted that, in the present invention, if the second RMSI control channel needs to be repeatedly transmitted, the detection moment that corresponds to the second RMSI control channel and that is included in the configuration information of the second RMSI control channel may also be understood as a first detection moment of the second RMSI control channel in a period of repeated transmission.

In this manner, signaling overheads can be further reduced while it is ensured that the second terminal device 120 successfully accesses the network device 100.

In a sixth embodiment of this application, the second information is configuration information that corresponds to the first terminal device 110 and that is of a first remaining minimum system information RMSI control channel. The third information is configuration information that corresponds to the second terminal device 120 and that is of a second remaining minimum system information RMSI data channel.

Specifically, step 502 on the side of the first terminal device 110 may include the following steps.

2.1: The first terminal device 110 receives a broadcast message from a physical broadcast channel PBCH, to obtain some fields, namely, first information, in the broadcast message, where the first information includes master information block MIB information, and the MIB information includes RMSI control channel configuration information (namely, pdech-ConfigSIB1 information).

2.2: The first terminal device 110 parses, based on the first information, control information for scheduling the RMSI.

2.3: The first terminal device 110 determines, based on the control information for scheduling the RMSI, RMSI information carried on a data channel (for example, a PDSCH), to successfully access the network device 100.

Alternatively, more specifically, 2.2 may be as follows: The first terminal device 110 may determine, based on the configuration information of the first RMSI control channel through blind detection, the first RMSI control channel corresponding to the first terminal device 110, and parse control information included in the first RMSI control channel.

Step 2.3 may further be: The first terminal device 110 determines corresponding RMSI data channel configuration information based on the control information. Step 502 may further include the following step.

2.5: The first terminal device 110 parses information included in the RMSI data channel, and finally determines first RMSI information, so as to successfully access the network device 100.

Step 502 on the side of the second terminal device 120 may further include the following steps.

3.1: The second terminal device 120 receives a broadcast message from a physical broadcast channel PBCH, to obtain some fields, namely, first information, in the broadcast message, where the first information includes master information block MIB information, and the MIB information includes pdcch-ConfigSIB1 information.

3.2: The second terminal device 120 parses the pdcch-ConfigSIB1 information to obtain control information for scheduling an RMSI data channel.

3.3: The second terminal device 120 determines, based on the control information for scheduling the RMSI data channel, RMSI information corresponding to the second terminal device 120.

To be specific, the second terminal device 120 may directly determine, by parsing pdcch-ConfigSIB1, information such as a time resource location and a frequency resource location of a data channel for transmitting RMSI, a modulation and coding scheme (Modulation Coding Scheme, MCS) corresponding to RMSI transmission, a transport block size (Transport Block Size, TBS), and a quantity of times of repeated transmission, and determine the RMSI. The second terminal device 120 can successfully access the network device 100 without first repeatedly receiving the PDCCH including the RMSI data channel configuration information.

It should be noted that the RMSI data channel configuration information may be all or some control information, and the control information is information required for parsing information carried on the RMSI data channel.

FIG. 7 is a schematic diagram of obtaining configuration information by a terminal device according to an embodiment of this application. As shown in FIG. 7, information included in a control channel is carried in a control resource set CORESET, and a time resource and a frequency resource corresponding to the CORESET are indicated by using information in a PBCH. Therefore, the first terminal device 110 needs to first parse master information block MIB information carried in a broadcast message received by using the PBCH, to obtain pdcch-ConfigSIB1 information, namely, configuration information of the CORESET that is for scheduling the RMSI, then parse the configuration information of the CORESET that is for scheduling the RMSI, obtain a first RMSI control channel corresponding to the first terminal device 110, determine, based on control information of the RMSI control channel, corresponding RMSI data channel configuration information, and finally determine RSMI information based on the RMSI data channel configuration information. The second terminal device 120 may directly parse the master information block MIB information carried in the broadcast message received by using the PBCH, to obtain RMSI data channel configuration information, so as to determine the RSMI information based on the RMSI data channel configuration information.

In such a parsing manner, it can be ensured that the second terminal device 120 parses the MIB message based on an actual status of the second terminal device 120 without increasing system overheads (for example, MIB information does not change), to obtain configuration information for accessing the network device, and successfully access the network device 100.

In addition, the second terminal device 120 needs to repeatedly receive information sent by the network device due to a CE requirement, a limited bandwidth capability, and/or the like, to ensure normal data transmission with the network device. Therefore, if the second terminal device 120 also first receives the control channel configuration information that is for scheduling the RMSI, the control channel carrying the control channel configuration information needs to be repeatedly sent. This increases system overheads. In addition, because the second terminal device 120 needs to first correctly receive the RMSI control channel configuration information, and then receive the RMSI data channel configuration information, a delay in accessing the network device 100 by the second terminal device 120 is also affected. As shown in FIG. 7, in the foregoing manner of parsing the first information, because the second terminal device 120 does not need to parse a PDCCH, both a delay in accessing the network device by the second terminal device 120 and channel overheads of the control channel can be reduced.

Optionally, the configuration information of the first RMSI control channel may include but is not limited to at least one of the following information: bandwidth information of the first RMSI control channel, a detection period corresponding to the first RMSI control channel, a detection moment corresponding to the first RMSI control channel, a subcarrier spacing corresponding to the first RMSI control channel, a time domain resource of the first RMSI control channel, and a quantity of times the first RMSI control channel is repeatedly transmitted in a detection period of the first RMSI control channel; and/or the configuration information of the second RMSI data channel may include but is not limited to at least one of the following information: bandwidth information of the second RMSI data channel, a detection period corresponding to the second RMSI data channel, a detection moment corresponding to the second RMSI data channel, a subcarrier spacing corresponding to the second RMSI data channel, a time domain resource of the second RMSI data channel, a quantity of times the second RMSI data channel is repeatedly transmitted in the detection period of the second RMSI data channel, a transport block size corresponding to the second RMSI data channel, a modulation and coding scheme corresponding to the second RMSI data channel, and a frequency domain frequency hopping range of the second RMSI data channel. The bandwidth information of the RMSI control channel is a bandwidth corresponding to a search space in which the RMSI control channel is located. Herein, a detection period, a detection moment, and a subcarrier spacing that correspond to a data channel may be understood as a period of detecting the data channel by the terminal device, a detection moment, and a subcarrier spacing corresponding to a frequency resource corresponding to the data channel. A TBS and an MCS that correspond to the data channel may be understood as a TBS and an MCS that are used by the network device to transmit information carried on the data channel.

For explanations of various types of information included in the RMSI data channel configuration information, refer to the foregoing explanations of various types of information included in the RMSI control channel configuration information. Details are not described herein again.

Similarly, although both the configuration information of the first RMSI control channel and the configuration information of the second RMSI data channel include the bandwidth information, the detection period, the detection moment, the subcarrier spacing, and time-domain resource configuration information, specific content indicated by the configuration information of the first RMSI control channel and specific content indicated by the configuration information of the second RMSI data channel are different. The former is related configuration information of the control channel, and the latter is related configuration information of the data channel. In addition, as described above, the two pieces of configuration information have completely different parsing methods and parsing processes, and this is determined by the terminal device based on a specific hardware condition, a software condition, an application requirement, an application scenario, and the like of the terminal device.

Optionally, the bandwidth information of the first RMSI control channel may be different from the bandwidth information of the second RMSI data channel.

The NR system is used as an example, the first terminal device 110 parses an 8-bit RMSI configuration (pdcch-ConfigSIB1, corresponding to the first information in the present invention) included in the MIB, and information (corresponding to the second information in the present invention) obtained through parsing may include: a time-frequency resource corresponding to a common search space including type0-PDCCH (Type0-PDCCH) for scheduling a first RMSI, and a detection moment of detecting the first RMSI control channel. Specifically, the first terminal device 110 may determine a time-frequency resource based on the most significant four bits in the eight bits, and determine a detection moment based on the least significant four bits. In another aspect, the second terminal device 120 parses the 8-bit RMSI configuration (pdcch-ConfigSIB1, corresponding to the first information in the present invention) included in the MIB, and information (corresponding to the third information in the present invention) obtained through parsing may include a time-frequency resource corresponding to the second RMSI data channel, and a detection moment of detecting the second RMSI data channel.

More specifically, in the current NR system, the network device indicates, by using 4 bits of 8-bit pdcch-ConfigSIB1 information, the following information: a multiplexing mode between an SSB and a control resource set CORESET in which the first RMSI control channel is located, bandwidth information (for example, indicated by a quantity of RBs) of the first RMSI control channel, a time domain resource (for example, indicated by a quantity of OFDM symbols) of the first RMSI control channel, and a frequency domain resource of the first RMSI control channel. The frequency domain resource of the first RMSI control channel is represented by using the bandwidth information of the first RMSI control channel and a frequency offset A. The frequency offset A may be understood as an offset between the frequency domain resource of the first RMSI control channel and an SSB frequency domain resource, and the SSB may be an SSB associated with the first RMSI, for example, an SSB that has a same transmit beam direction as the first RMSI. The second terminal device 120 may determine, based on indication information (which may correspond to a part of first information in the present invention, and the first information herein is understood as pdcch-ConfigSIB1) corresponding to a frequency domain resource of the first RMSI control channel, a frequency domain resource corresponding to the frequency domain frequency hopping range of the second RMSI data channel. Within the frequency domain frequency hopping range, the network device may implement frequency hopping transmission for the second RMSI data channel based on a specific frequency hopping pattern. The bandwidth of the second RMSI data channel may be pre-configured. Optionally, herein, there is a frequency offset B between the frequency domain resource that corresponds to the frequency domain frequency hopping range of the second RMSI data channel and that is determined by the second terminal device 120 and the frequency domain resource of the first RMSI control channel. A value of the frequency offset B may be the same as or different from the value of the frequency offset A. This is not specifically limited. In the present invention, a frequency offset between a frequency domain resource A and the frequency domain resource B may be represented by using a highest frequency corresponding to the frequency domain resource A and a highest frequency corresponding to the frequency domain resource B, or may be represented by using a lowest frequency corresponding to the frequency domain resource A and a lowest frequency corresponding to the frequency domain resource B, or may be represented in another manner. This is not specifically limited. The highest frequency may be represented by an RB including the highest frequency, and the lowest frequency may be represented by an RB including the highest frequency. It should be noted that, in the present invention, if the lowest frequency or the highest frequency corresponding to the determined frequency domain resource exceeds a lowest frequency or a highest frequency corresponding to a transmission bandwidth of the network device, the terminal device may perform cyclic extension on the determined frequency domain resource within the transmission bandwidth of the network device. It is assumed that an RB is used to represent the transmission bandwidth of the network device and the determined frequency domain resource. If a minimum RB corresponding to the transmission bandwidth of the network device is an RB 1 and a maximum RB is an RB 100, in other words, the transmission bandwidth of the network device includes 100 RBs, the RB 1 corresponds to an RB including a low frequency, and the RB 100 corresponds to an RB including a high frequency, and if an RB range corresponding to the frequency domain resource of the first RMSI control channel is from an RB 91 to an RB 95, and the frequency offset B is six RBs, the frequency domain resources corresponding to the frequency domain frequency hopping range of the second RMSI data channel may be an RB 96 to an RB 101. Because the RB range corresponding to the transmission bandwidth of the network device is from the RB 1 to the RB 100, it may be determined that the frequency domain resources corresponding to the frequency domain frequency hopping range of the second RMSI data channel are from the RB 96 to the RB 100 and the RB 1. In another aspect, in the current NR system, the network device indicates, by using the other four bits of the 8-bit pdcch-ConfigSIB1 information, the following information: the detection moment of the first RMSI control channel. The second terminal device 120 may determine the transmission moment of the second RMSI data channel based on indication information (which may correspond to a part of the first information in the present invention, and the first information herein is understood as pdcch-ConfigSIB1) corresponding to the detection moment of the first RMSI control channel. More specifically, if the second RMSI data channel needs to be repeatedly transmitted, the foregoing determined transmission moment of the second RMSI data channel may be understood as a first transmission moment of the second RMSI data channel in the repetition transmission period.

In a seventh embodiment of this application, because the first terminal device 110 is a broadband terminal device (normal terminal device), and has a higher data transmission capability, the first terminal device 110 may also support the first terminal device 110 in obtaining the RMSI data channel configuration information by using the foregoing parsing method that is the same as that of the second terminal device 120. In other words, the second information is configuration information that corresponds to the first terminal device 110 and that is of a first RMSI data channel, and the third information is configuration information that corresponds to the second terminal device 120 and that is of a second RMSI data channel.

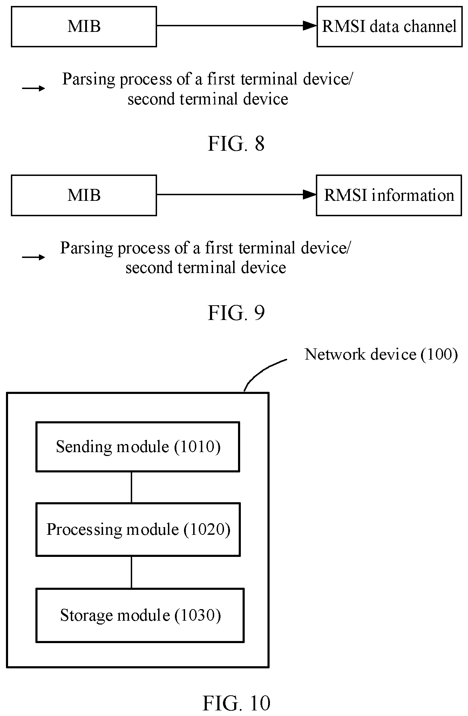

For example, when the first terminal device 110 moves to an environment with limited coverage, or needs to save power, or the network device is overloaded, the first terminal device 110 may also support the first terminal device 110 in obtaining the RMSI data channel configuration information by using the foregoing parsing method that is the same as that of the second terminal device 120. FIG. 8 is another schematic diagram of obtaining configuration information by a terminal device according to an embodiment of this application.

In an eighth example not forming part of the invention, the second information is configuration information that corresponds to the first terminal device 110 and that is of a first remaining minimum system information RMSI control channel. The third information is second RMSI information corresponding to the second terminal device 120.

Specifically, pdcch-ConfigSIB1 information included in master information block MIB information in the first information is directly associated with the second RMSI information. Therefore, the second terminal device 120 may directly associate with the second RMSI information by parsing the information. For example, the pdcch-ConfigSIB1 information is 8-bit information, and therefore 256 types of RMSI information may be associated. Similarly, the first terminal device 110 may also obtain, by using a same parsing method as the second terminal device 120, the RMSI information corresponding to the second terminal device. FIG. 9 is still another schematic diagram of obtaining configuration information by a terminal device according to an embodiment of this application.

As shown in FIG. 9, in comparison with the method in which PDSCH configuration information carrying RMSI is directly associated by parsing MIB information, in this method, the PDSCH may not be parsed, in other words, data channel configuration information does not need to be parsed, and RMSI information is directly obtained by parsing the MIB information. Therefore, a lower latency of accessing a network device by the terminal device and lower channel overheads of a control channel and a data channel can be implemented in the same time.

In a ninth embodiment of this application, the second information is configuration information that corresponds to the first terminal device 110 and that is of a first initial active bandwidth part BWP, and the third information is configuration information that corresponds to the second terminal device 120 and that is of a second initial active bandwidth part BWP.

The BWP configuration information may include at least one of the following: a frequency domain resource corresponding to the BWP, a subcarrier spacing corresponding to the BWP, and the like.

It should be noted that, in the present invention, the initial active BWP may be understood as a frequency range of data transmission between the terminal device and the network device before the terminal device enters a connected mode. After entering the connected mode, the terminal device may transmit data in the frequency domain range corresponding to the initial active BWP, or may transmit data in a frequency domain range corresponding to another BWP notified by the network device 100 by using RRC signaling. For a terminal device with a relatively low bandwidth capability (which may be specifically understood as the second terminal device 120 in this embodiment), the third information may also be understood as a frequency domain frequency hopping range that corresponds to the second terminal device 120 and that is of the second initial active BWP.

Optionally, when the third information includes the frequency domain frequency hopping range of the second initial active BWP, a frequency domain bandwidth corresponding to the second initial active BWP may be pre-configured, for example, may be six RBs.

Optionally, a bandwidth corresponding to the first initial active BWP is different from a bandwidth corresponding to the second initial active BWP. The initial active BWP may be understood as a frequency domain range corresponding to data transmission between the terminal device and the network device 100 when the terminal device does not enter a connected mode. Therefore, different types of terminal devices may communicate with the network device in different initial active BWPs by using the first information, and the network device 100 may adaptively design control channel bandwidth information based on transmission bandwidth capabilities of the different types of terminal devices, to optimize system resource usage efficiency.

For any one of the foregoing embodiments, further optionally, the first information may further include fourth information, and the fourth information is used to forbid the first terminal device or the second terminal device to access the network device.

Optionally, the fourth information may be further used to forbid the first terminal device or the second terminal device to parse the first information.

For example, after receiving the first information, if finding, through parsing, that the fourth information included in the first information is forbidding the second terminal device 120 to access the network device or forbidding the second terminal device 120 to parse the first information (a bit of the fourth information is 1, that is, forbidding access), the second terminal device 120 stops information parsing and subsequent access.

Further optionally, the fourth information may alternatively be independent of the first information. For example, the fourth information may be synchronously sent to the terminal device with the first information by using a broadcast message, or may be synchronously sent to the terminal device with the first information by using another sending manner. Optionally, the fourth information may be sent to the terminal device before a time range specified by the first information. This is not limited in this application.

Because the broadcast message is oriented to all terminal devices camping on the cell, the foregoing method for sending the fourth information can avoid unnecessary information parsing and accessing request, and unnecessary power consumption that are caused by the terminal device because the terminal device does not know that the network device 100 does not support access of the type of terminal device, after receiving the first information, continuously parses the first information to obtain configuration information for accessing the network device, and continuously attempts to request to access the network device 100.

It should be noted that, in the present invention, the first information may be represented in a form of information including a master information block MIB, or may be information indicating RMSI control channel configuration information (for example, pdcch-ConfigSIB1), or may be other information. This is not specifically limited.

It should be noted that, in the present invention, because the first terminal device and the second terminal device have a same capability of parsing the first information, in other words, both the first terminal device and the second terminal device can parse the first information, the first terminal device may obtain the third information corresponding to the second terminal device, and the second terminal device may also obtain the second information corresponding to the third terminal device. A terminal device having a strong bandwidth capability, for example, the first terminal device, when the terminal device cannot maintain data transmission with the network device by using the second information (for example, when the first terminal device enters an area with relatively poor coverage such as a basement or a tunnel), may directly maintain data transmission with the network device by using the third information, and do not need to re-establish an RRC connection to the network device. Therefore, a data transmission delay of user equipment can be reduced, and unnecessary access signaling overheads can be reduced.

It should be noted that, in the present invention, the third information may further include a quantity of times the second RMSI control channel is repeatedly transmitted. Optionally, for example, the first information is pdcch-ConfigSIB 1. The second terminal device may determine, based on a frequency domain resource (or a frequency domain resource size) and/or a time domain resource (or a time domain resource size) that correspond/corresponds to the first RMSI control channel and that are/is indicated by pdcch-ConfigSIB 1, the quantity of times the second RMSI control channel is repeatedly transmitted. For example, an existing NR system is used as an example. When the frequency domain resource size (or a maximum frequency domain resource size) that corresponds to the first RMSI control channel and that is indicated by pdcch-ConfigSIB1 is M RBs, and the time domain resource size (or a maximum time domain resource size) that corresponds to the first RMSI control channel is N OFDM symbols, the second terminal device may determine different quantities of times of repeated transmission based on a range of M x N. A larger M x N value corresponds to a larger quantity of repetitions, or a larger M x N value corresponds to a smaller quantity of repetitions. For example, when subcarrier spacings of both an SSB and the first RMSI control channel are 15 kHz, and a system bandwidth of the network device is 10 MHz, the frequency domain resource size corresponding to the first RMSI control channel may be 24, 48, or 96 RBs, and the time domain resource size corresponding to the first RMSI control channel may be 1, 2, or 3 OFDM symbols. Therefore, the second terminal device may determine, based on a product of the frequency domain resource size and the time domain resource size, the quantity of times the first RMSI control channel is repeatedly transmitted. Further, in addition to the product of the frequency domain resource size and the time domain resource size, the quantity of times the first RMSI control channel is repeatedly transmitted may be further determined based on the time domain resource size or the frequency domain resource size. Different quantities of times of repeated transmission may uniquely correspond to one product result, or may correspond to a plurality of product results. This is not specifically limited in the present invention. It should be noted that the foregoing description is also valid when the third information includes the quantity of retransmission times of the second RMSI data channel. Details are not described. In this implementation, the quantity of times of repeated transmission does not need to be indicated by using additional signaling, so that system signaling overheads can be reduced.

It should be noted that, in the present invention, a transport block size of the second RMSI data channel may alternatively be indicated by using a redundant bit carried on a PBCH. For example, if an operating frequency of the network device is sub-3 GHz, the redundant bit carried on the PBCH may include two bits used to indicate an SSB time index, and the SSB time index corresponds to a time location at which the network device sends the SSB. In addition, the transport block size may be further indicated by using a cell identity code included in the network device or a demodulation reference signal configuration, and the demodulation reference signal may be used to demodulate the first information.

It should be noted that, in the present invention, to reduce impact on the first terminal device, or to reduce impact on the configuration information that corresponds to the first terminal device and that is for accessing the network device, different third information may be indicated by using at least one of the following: the redundant bit carried on the PBCH, the demodulation reference signal configuration (for example, the demodulation reference signal configuration used to demodulate the first information), and the cell identity code included in the network device. Information included in each piece of third information may be the information described in the foregoing embodiment. A difference lies in that at least one piece of information in the different pieces of third information corresponds to a different specific value. For example, if the different pieces of third information include the frequency domain resources of the second RMSI control channels, the different third information includes different frequency domain resource sizes and/or different frequency domain resource ranges of the second RMSI control channels.

It should be noted that, in the present invention, the third information and the second information may have an association relationship. In other words, information separately determined by the terminal device based on the second information and the third information may have an association relationship. For example, the second information includes a frequency domain resource A corresponding to the first RMSI control channel, and the terminal device may determine configuration information of the second RMSI control channel based on the third information. The configuration information of the second RMSI control channel includes a frequency domain resource B corresponding to the second RMSI control channel, there may be a pre-configured frequency domain offset C or a frequency domain offset C notified by using signaling between the frequency domain resource A and the frequency domain resource B. In this way, for the second terminal device, a manner of determining the frequency domain resource B is directly determining the frequency domain resource B based on the third information. In other words, the third information includes configuration information of the frequency domain resource B. Alternatively, in another aspect, the frequency domain resource B may be determined based on the frequency domain resource A and the frequency domain offset C. As described above, because the second terminal device and the first terminal device have a same capability of parsing the first information, the second information may be determined by using the first information. In other words, configuration information corresponding to the frequency domain resource A may be obtained, and then, the configuration information corresponding to the frequency domain resource B is determined based on the frequency domain offset C. In this case, the third information may include information about the frequency domain offset C. Certainly, the frequency domain offset C may also be pre-configured. This is not specifically limited in the present invention.

Similarly, the second terminal device determines, based on the corresponding configuration information and the corresponding offset that are obtained by the first terminal device through parsing, configuration information corresponding to the second terminal device. This method and idea are also applicable to another embodiment described in the present invention.

In the present invention, because the network device can support data transmission between different types of terminal devices and the network device, a unified air interface design can be implemented for efficient coexistence, and data transmission of the different types of terminal devices can be flexibly supported. For example, data transmission of both a broadband terminal device (the first terminal device) and a narrowband terminal device (the second terminal device) can be supported, so as to avoid existence of a plurality of systems. For example, a system serving the broadband terminal device and a system serving the narrowband terminal device do not coexist, thereby simplifying network deployment. In addition, because the network device can support access of the different types of terminal devices by sending the same first information, repeated message sending can be avoided, repeated overheads can be avoided, and efficient energy saving is implemented. In addition, the method for designing the unified air interface for efficient coexistence can be well integrated into a design of an NR forward compatibility air interface framework, to simplify complexity of subsequent NR network deployment. For example, in a subsequent evolution design of NR, if the terminal device A can transmit data with the network device by using the configuration information corresponding to the first terminal device, and can transmit data with the network device by using the configuration information corresponding to the second terminal device, because the unified air interface design for efficient coexistence is implemented by using the present invention, the terminal device A that appears in the subsequent evolution of NR may directly transmit data with the network device. In this way, design complexity and network deployment complexity of subsequent evolution of NR are simplified. It should be noted that, in the present invention, both the first terminal device and the second terminal device may be terminal devices of an MTC type.

On the other hand, in some scenarios, a terminal device with a very high data transmission rate is not required. An example in which the terminal device that does not require the very high data transmission rate is the second terminal device is used for description. The second terminal device may be a terminal device in the following scenarios: a sensor sensor in an industrial sensor network, a surveillance camera lens in an economic video surveillance (Economic Video Surveillance) scenario, a wearable (Wearable) device, and the like. In the foregoing scenario, because a requirement on a data transmission rate is not high, for example, the data transmission rate is lower than a data transmission rate of an intelligent terminal device, the data transmission rate in the foregoing scenario may be implemented through narrowband data transmission. In addition, because transmission bandwidth used for the narrowband data transmission is relatively narrow, the second terminal device does not need to have a very high maximum data transmission bandwidth capability. A smaller maximum data transmission bandwidth capability indicates lower power consumption consumed by the second terminal device during data transmission. Therefore, power of the second terminal device can be saved.

In the present invention, the terminal device may be a terminal device having a single function, for example, the broadband terminal device or the narrowband terminal device. Alternatively, the terminal device may be a terminal device with a combination of functions, for example, may be a terminal device having functions of both the broadband terminal device and the narrowband terminal device (for example, a broadband and narrowband integrated terminal device, or an intelligent terminal having an mMTC function).

The terminal device with a combination of functions may transmit data with the network device by using at least one link. For example, the terminal device with the combination of functions may transmit data with the network device by using two radio links: a first radio link and a second radio link.

The first terminal device receives enabling information sent by the network device, where the enabling information is used by the first terminal device to monitor the second radio link between the first terminal device and the network device. The first terminal device may transmit data with the network device by using the first radio link and/or the second radio link. Compared with the first radio link, the second radio link may ensure data transmission between the terminal device and the network device when a channel condition is relatively poor. For example, in this case, the second radio link may transmit information by using a higher aggregation level (Aggregation Level, AL) or more transmission resources. Herein, the poor channel condition may be represented by a low signal-to-noise ratio (Signal-to-Noise Ratio, SNR) or a low signal-to-interference-plus-noise ratio (Signal-to-Interference-Noise Ratio, SINR). Alternatively, compared with the first radio link, the second radio link can implement a maximum coupling loss (maximum coupling loss, MCL) corresponding to data transmission between the terminal device and the network device. In other words, a larger coverage area can be implemented for data transmission implemented by using the second radio link. Optionally, in this case, the second radio link may be implemented in a manner such as repeated transmission or increasing a data transmit power spectral density. Alternatively, compared with the first radio link, the second radio link can implement more energy-saving data transmission between the terminal device and the network device. For example, a data transmission bandwidth corresponding to the second radio link is narrower.

When the first terminal device is a broadband and narrowband integrated device, in addition to transmitting data with the network device by using the first radio link, the first terminal device may further perform data transmission with the network device by using the second radio link. For example, in the present invention, the first radio link may correspond to a radio link for data transmission between the network device and the broadband terminal device in the present invention or between the network device and a terminal device that cannot transmit data with the network device by using the third information. The second radio link may correspond to a radio link for data transmission between the narrowband terminal device and the network device in the present invention.

Currently, the terminal device may implement effective transmission with the network device by detecting quality of a radio link. The quality of the radio link may be detected by using radio link monitoring (Radio Link Monitoring, RLM). When the terminal device determines that the terminal device cannot maintain data transmission with the network device by using an existing radio link, in other words, when the terminal device determines that a radio link failure (Radio Link Failure, RLF) occurs, the terminal device may perform radio resource control (radio resource control, RRC) reestablishment with an access network device. If the RRC reestablishment fails, the terminal device falls back to an RRC idle (idle) state. In this embodiment of this application, for the first terminal device that can transmit data by using the first radio link and the second radio link, even if one radio link fails, the terminal device may continue to work in the other radio link. In this way, unnecessary RRC reestablishment or even unnecessary idle state rollback is avoided, an RRC connection reestablishment overhead and power consumption are reduced. In addition, compared with the first radio link, the second radio link can provide the larger coverage area and implement a more energy-saving data transmission method as described above. Therefore, the first terminal device performs data transmission with the network device by using the second radio link, so that far-reaching coverage transmission and/or energy-saving data transmission of the first terminal device can be implemented.

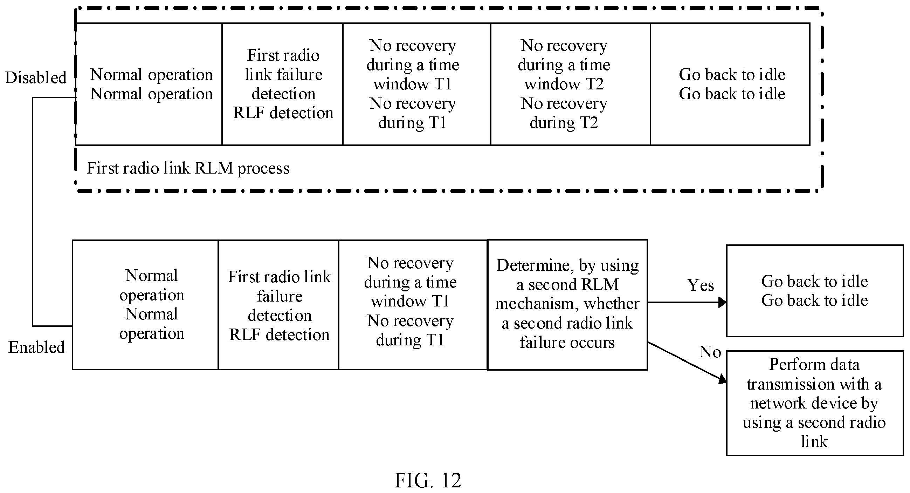

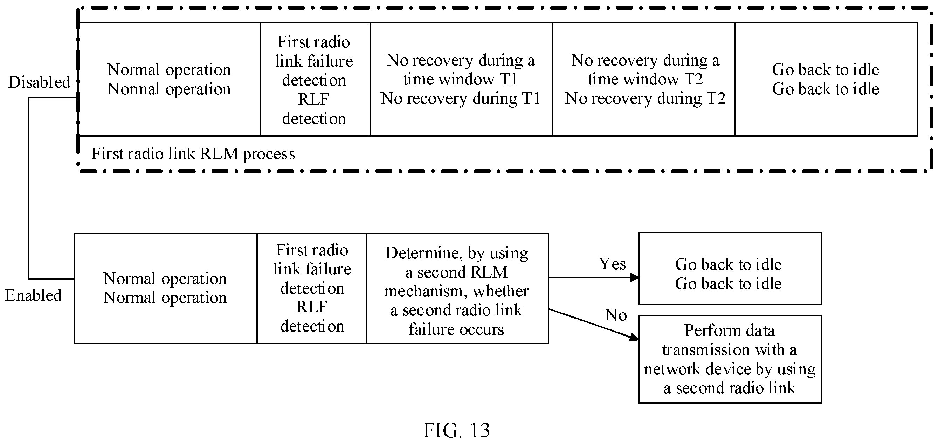

In this embodiment of this application, before determining whether the first terminal device can transmit data with the network device by using the second radio link, the first terminal device may further receive the enabling information sent by the network device. The enabling information is used to enable the first terminal device to monitor the RLM by using the second radio link, to detect the quality of the data transmission link between the first terminal device and the network device. It should be noted that, after receiving the enabling information, the first terminal device does not necessarily monitor the quality of the data transmission link between the first terminal device and the network device by using the second radio link RLM. For example, the enabling information may be used to enable the first terminal device, after the first radio link fails, to implement the RLM by using the second radio link. Alternatively, the enabling information is used to indicate that the network device has a capability of transmitting data to the second terminal device (for example, the narrowband terminal device in the present invention), or it is understood that the network device has a data channel for transmitting data to the second terminal device. For example, a service provided by the network device is ensured for the second terminal device in a manner such as repeated sending or increasing the power spectral density. Specifically, a time that the first terminal device monitors the quality of the data transmission link by using a second radio link RLM process is not specifically limited. FIG. 12 and FIG. 13 illustrate two implementations. When the first terminal device does not receive the enabling information, the terminal device monitors channel quality of the first radio link by using a first radio link RLM process. When the first terminal device receives the enabling information, the terminal device may monitor the radio link quality by using the second radio link RLM after the RLF occurs on the first radio link. It should be noted that, because the first terminal device may monitor the quality of the radio link (the radio link between the terminal device and the network device) by using the two types of RLM processes, the RLM process of the first terminal device may also be understood as dual-meaning RLF, dual-meaning RLM, dual-RLF, or dual-RLM. It should be noted that, when the second radio link corresponds to a data transmission link between the narrowband terminal device and the network device, the first terminal device that may transmit data with the network device by using the first radio link and the second radio link may be understood as a broadband and narrowband integrated terminal device. Extendedly, the first terminal device may perform data transmission with the network device by using three or more radio links. A difference among different radio links is the same as a difference between the first radio link and the second radio link. Details are not described. In the present invention, the enabling information may be configured for the first terminal device in an explicit manner. For example, the network device directly configures to enable the second radio link RLM for the first terminal device. Alternatively, the enabling information may be configured for the first terminal device in an implicit manner, for example, an SNR or an SINR corresponding to RLF is lower than a threshold in a process of configuring the RLM, or a timer length corresponding to the RLF in a process of configuring the RLM is greater than a threshold.

Alternatively, the first information may be a reference signal. The first terminal device obtains a channel estimation result based on the first information, and the second terminal device obtains the channel estimation result and data transmission scheduling information based on the first information.

Optionally, the first terminal device may further obtain a channel estimation result and data transmission scheduling information based on the first information.

In the present invention, the first information may further be a reference signal used for data demodulation. The reference signal may be used for downlink transmission data demodulation, and the downlink transmission data may be transmitted by using a PDCCH or a PDSCH. This is not specifically limited.

In the present invention, the first terminal device obtains the second information based on the first information. The second information herein may be understood as the channel estimation result or channel quality determined based on the first information. The channel estimation result may be used for data demodulation. The second terminal device obtains the third information based on the first information, the third information herein may be understood as the channel estimation result (or channel quality) determined based on the first information and control information for scheduling data transmission. In this implementation, the different types of terminal devices may parse out different information based on the same first information sent by the network device, so as to reduce power consumption on a network side and implement efficient energy saving. In addition, the second terminal device may determine, by using the first information, the channel estimation result (or channel quality) and the control information for scheduling data transmission. In other words, overheads for transmitting the control information by the network side device may be reduced. It may be understood that reducing the overheads for transmitting the control information also helps reduce power consumption on the network side, and implement efficient energy saving. It may be understood that a reference signal having the foregoing feature may be considered as a dual-meaning RS.

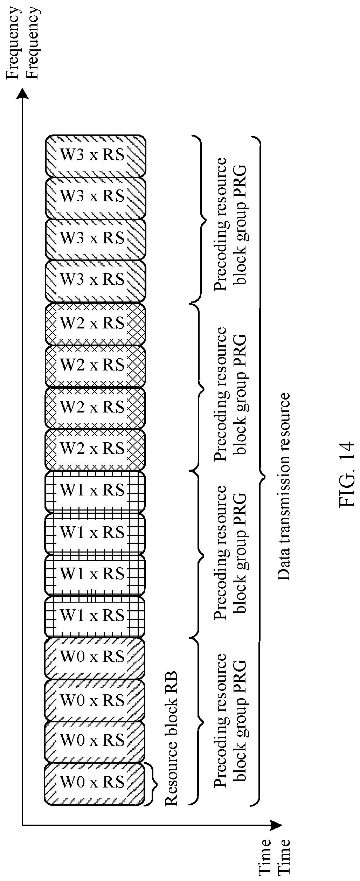

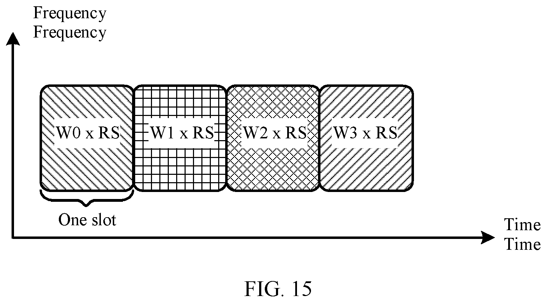

FIG. 14 shows an implementation. Control information for scheduling data transmission may be superimposed on a reference signal. For a terminal device that can determine only channel estimation (or channel quality) based on the reference signal, the control information may be used as a part of a channel estimation result. In FIG. 14, one resource block (Resource Block, RB) includes consecutive subcarriers or includes consecutive resource elements (Resource Element, RE) in frequency domain. A quantity of subcarriers included in one RB may be equal to 12, or may be another positive integer. This is not specifically limited. One precoding resource block group (Precoding Resource block Group, PRG) includes consecutive RBs, a quantity of the included consecutive RBs may be configured by the network device or predefined (in the figure, that one PRG includes four RBs is used as an example), and quantities of RBs included in all the PRGs may be the same or may be different. In a PRG, the terminal device may consider that precoding (Precoding) used by the network device to send data is the same. In other words, the terminal device may perform joint channel estimation by using a reference signal included in the PRG. Data transmission resources in the figure represent resources that can be used for data transmission. To be specific, data transmission resources scheduled for the terminal device may be the data transmission resources in the figure, or may be some resources included in the data transmission resources in the figure. When the data transmission resources scheduled for the terminal device are the some resources included in the data transmission resources in the figure, the data transmission resources scheduled for the terminal device may be continuously distributed, or may be discontinuously distributed. Further, optionally, the discontinuously distributed data transmission resources may be evenly and discontinuously distributed. In other words, the scheduled data transmission resources are discretely distributed at an equal interval. Alternatively, the discontinuously distributed data transmission resources may be non-uniformly and discontinuously distributed. In other words, the scheduled data transmission resources are discretely distributed at unequal intervals. For example, the data transmission resource in the figure includes 16 RBs. It may be understood that the quantity of RBs included in the data transmission resource may alternatively be another value. For example, the data transmission resource in the figure may correspond to a BWP of the terminal device. Wi x RS (where i = 0, 1, 2, 3) shown in the figure may represent first information, and [WO W1 W2 W3] may be understood as an orthogonal sequence or a pseudo-orthogonal sequence, for example, may be a hadamard code (Hadamard code). RS represents a reference signal, for example, a demodulation reference signal (Demodulation Reference Signal, DMRS) used in a current NR system. The first terminal device may determine the channel estimation result (or channel quality) based on Wi x RS. The first terminal device may not identify Wi. The second terminal device may identify Wi and RS. The channel estimation result (or channel quality) may be determined by using Wi, that is, control information that is for scheduling data transmission and that is indicated by [WO W1 W2 W3], RS, or Wi and an RS. For example, if [WO W1 W2 W3] may be [1 1 1 1], or [1 -1 1 -1], or [1 -1 -1 1], [W0 W1 W2 W3] may represent three different types of control information. It may be understood that the control information used to indicate scheduling data transmission may alternatively be superimposed on a reference signal distributed in a time location. For example, as shown in FIG. 15, an example in which the reference signal distributed in time location is a reference signal distributed in a slot is used for description, and the reference signal distributed in a time location may also be in another form, for example, a reference signal distributed on a symbol.

Further, optionally, a terminal device of a same type, for example, the first terminal device, may determine, by using the first information in addition to determining the channel quality (or the channel estimation result), the control information for scheduling data transmission. For example, a terminal device of the NR release 15 or the NR release 16 can determine only the channel quality (or the channel estimation result) based on the first information. A terminal device of the NR release 17 or a later release can determine, based on the first information, the channel quality (or the channel estimation result), and can also determine the control information for scheduling data transmission.

Optionally, in the present invention, the first information may further be information included in a downlink control channel, and the downlink control channel is a channel used to carry the downlink control information. The downlink control channel in the present invention may be an NR-PDCCH and another channel that is newly defined in a future communications protocol and whose function is similar to that of the downlink control channel. The NR-PDCCH (new radio PDCCH) is a downlink control channel defined in an NR system. A type and a name of the downlink control channel are not limited in the embodiments of this application, and all downlink control channels are collectively referred to as PDCCHs. Specifically, the PDCCH in this embodiment of this application may alternatively be a PDCCH based on a cell-specific reference signal (Cell-specific Reference Signal, CRS) or a PDCCH based on a demodulation reference signal (Demodulation Reference Signal, DMRS). The CRS-based PDCCH may be a PDCCH demodulated based on the CRS, and the DMRS-based PDCCH may be a PDCCH demodulated based on the DMRS. A CRS is a reference signal (Reference Signal, RS) configured by the network device for all terminal devices in a cell, and a DMRS is an RS configured by the network device for a specific terminal device, or may also be referred to as a terminal device-specific reference signal (UE-specific Reference Signal, URS). It should be noted that the PDCCH defined in the NR system may be the foregoing PDCCH of the DMRS.

In the present invention, because the network device may serve different types of terminal devices, flexible and adaptive transmission may be performed based on service features of the different types of terminal devices. In other words, an adaptive data transmission solution may be used for diversified terminal devices. In the present invention, the terminal device may be a terminal device having a single function, for example, a broadband terminal device or a narrowband terminal device, or may be a terminal device with a combination of functions, for example, a smart terminal device having an MTC capability or a broadband and narrowband integrated terminal device. It should be noted that, in the present invention, before transmitting data to the network device by using configuration information corresponding to the narrowband terminal device, the broadband and narrowband integrated terminal device may first determine whether the enabling information sent by the network device is received. The enabling information is used to enable the broadband and narrowband integrated terminal device not to transmit data with the network device by using the configuration information corresponding to the narrowband terminal device, or enable the broadband and narrowband integrated terminal device to transmit data with the network device by using the configuration information corresponding to the narrowband terminal device. It should be noted that, in the present invention, an implementation applicable to the broadband and narrowband integrated terminal device is also applicable to the intelligent terminal having the mMTC function or the terminal device with the combination of functions. An implementation applicable to the intelligent terminal having the mMTC function is also applicable to the broadband and narrowband integrated terminal device or the terminal device with the combination of functions. An implementation applicable to the terminal device with the combination of functions is also applicable to the intelligent terminal having the mMTC function or the broadband and narrowband integrated terminal device.

It should be noted that, in the present invention, when the network device notifies the terminal device of information by using signaling, signaling that may be used includes broadcast signaling, radio resource control (Radio Resource Control, RRC) signaling, media access control (Media Access Control, MAC) signaling, physical layer signaling, or the like, or signaling in another form. This is not specifically limited.

It can be understood that, to implement the foregoing functions, the devices such as the network device and the terminal device include corresponding hardware structures and/or software modules for executing the functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of the present invention, the network device, the terminal device, and the like may be divided into function modules. For example, function modules corresponding to the functions may be obtained through division, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

For example, when each function module is obtained through division in an integrated manner, as shown in FIG. 10, FIG. 10 is a schematic structural diagram of a network device according to an embodiment of this application. The network device 100 may include a sending module 1010 and a processing module 1020. Optionally, the detection apparatus may further include a storage module 1030. The sending module 1010 is configured to send first information to the terminal device 110 in the data transmission method described above. The processing module 1020 is configured to: receive an access request of the terminal device in the data transmission method described above, establish a connection to the terminal device, process subsequent data transmission, and perform another processing process. The storage module 1030 is configured to store program instructions and/or data, to implement the data transmission method described above.

It should be noted that, specifically, the different types of terminal devices having different features such as different bandwidth capabilities may obtain, through parsing based on the first information, the configuration information that corresponds to the different terminal devices and that is for accessing the network device. Therefore, finally, if the terminal devices establish a connection to the network device, the terminal devices may use different time domain resources, frequency domain resources, and other transmission parameters. For a function that can be implemented by hardware of the network device and a specific process that can be performed by the hardware of the network device, refer to the foregoing description of the data transmission method. Details are not described herein again.

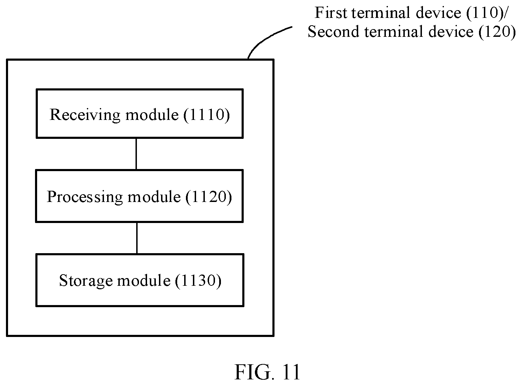

FIG. 11 is a schematic structural diagram of a terminal device according to an embodiment of this application. The terminal device may be a first terminal device 110, a second terminal device 120, or another type of terminal device. In FIG. 10, the second terminal device 120 is used as an example for description. The terminal device may include a receiving module 1110 and a processing module 1120. Optionally, the detection apparatus may further include a storage module 1130. The receiving module 1110 is configured to receive first information from the network device 100 in the data transmission method described above. The processing module 1120 is configured to parse the first information based on a specific feature such as a bandwidth capability of the terminal in the data transmission method described above, to obtain different configuration information that is for accessing a network, so as to establish a connection to the network device 100 based on the first information. The storage module 1130 is configured to store program instructions and/or data, to implement the data transmission method described above.

It should be noted that the terminal devices that receive the first information from the network device 100 may be of a same type, or may be of different types (for example, terminal devices having different transmission bandwidth capabilities may be understood as terminal devices of different types). The terminal device may parse out, based on different terminal device capabilities of the terminal device, configuration information that corresponds to different terminal devices and that is for accessing the network device, so as to successfully access the network device. In addition, because the different terminal devices may parse out, based on the same first information and the capabilities of the different terminal devices, the configuration information that corresponds to different terminal devices and that is for accessing the network device, system overheads can also be reduced.

For specific explanations of the same type and the different types, refer to the foregoing descriptions of the data transmission method. Details are not described herein again. In addition, for a function that can be implemented by hardware of the terminal device and a specific process can be performed by hardware of the terminal device, refer to the foregoing description of the data transmission method. Details are not described herein again.

It should be noted that the network device and the terminal device may further include a radio frequency circuit, configured to receive and send a radio signal in a communication process. For example, a radio frequency circuit of the network device 100 may receive uplink data of the terminal device, send the uplink data to a processor for processing, and the radio frequency circuit of the network device 100 sends downlink-related data to the terminal device. For another example, a radio frequency circuit of the first terminal device 110 may receive downlink data of the network device 100, send the downlink data to the processor for processing, and send uplink-related data to the network device. Generally, the radio frequency circuit includes but is not limited to an antenna, at least one amplifier, a transceiver, a coupler, a low noise amplifier, a duplexer, and the like. In addition, the radio frequency circuit may further communicate with another device through wireless communication. The wireless communication may use any communication standard or protocol, including but not limited to a global system for mobile communications, a general packet radio service, code division multiple access, wideband code division multiple access, long term evolution, an e-mail, a short message service, and the like.

In an optional manner, when data transmission is implemented by using software, all or some of the data transmission may be implemented in a form of a computer program product. The computer program product includes one or more computer instructions. When the computer program instructions are loaded and executed on the computer, the processes or functions according to the embodiments of this application are all or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

It should be noted that the processor configured to perform the foregoing data transmission method in the embodiments of this application may be a central processing unit (CPU), a general purpose processor, a digital signal processor (DSP), an application-specific integrated circuit (ASIC), a field programmable gate array (FPGA) or another programmable logic device, a transistor logic device, a hardware component, or any combination thereof. The processor may implement or execute various example logical blocks, modules, and circuits described with reference to content disclosed in this application. The processor may be a combination of processors implementing a computing function, for example, a combination of one or more microprocessors, or a combination of the DSP and a microprocessor.

Method or algorithm steps described in combination with the embodiments of this application may be implemented by hardware, or may be implemented by a processor by executing a software instruction. The software instruction may be formed by a corresponding software module. The software module may be located in a RAM memory, a flash memory, a ROM memory, an EPROM memory, an EEPROM memory, a register, a hard disk, a removable magnetic disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in the detection apparatus. Certainly, the processor and the storage medium may exist in the receiving apparatus as detection components.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

**Claims**

1. A data transmission method, wherein the method comprises:

   sending (401), by a network device (100), first information in a broadcast message to a first terminal device (110) and a second terminal device (120), the first terminal device (110) being a broadband terminal device or a broadband and narrowband integrated terminal device and the second terminal device (120) being a narrowband terminal device;

   receiving (402), by the network device (100), an access request of the first terminal device (110) and/or the second terminal device (120); and

   establishing, by the network device (100), a respective connection to the first terminal device (110) and/or the second terminal device (120);

   wherein:

   the first information is parsed by the first terminal device to obtain second information, the second information being remaining minimum system information, RMSI, control channel configuration information that is used by the first terminal device to obtain through blind detection a control channel that is used by the first terminal device to determine corresponding RMSI for accessing the network device; and

   the first information is parsed by the second terminal device to obtain third information, the third information being RMSI data channel configuration information that is used by the second terminal device to directly determine corresponding RMSI for accessing the network device;

   the method **characterised in that**:

   the second information is RMSI control channel configuration information that corresponds to the first terminal device; and

   the third information is RMSI data channel configuration information that corresponds to the second terminal device.

2. The method according to claim 1, wherein

   the configuration information of the RMSI control channel comprises at least one of the following information: bandwidth information of the RMSI control channel, a detection period corresponding to the RMSI control channel, a detection moment corresponding to the RMSI control channel, a subcarrier spacing corresponding to the RMSI control channel, a time domain resource of the RMSI control channel, and a quantity of times the RMSI control channel is repeatedly transmitted in the detection period of the RMSI control channel; and/or the configuration information of the RMSI data channel comprises at least one of the following information: bandwidth information of the RMSI data channel, a detection period corresponding to the RMSI data channel, a detection moment corresponding to the RMSI data channel, a subcarrier spacing corresponding to the RMSI data channel, a time domain resource of the RMSI data channel, a quantity of times the RMSI data channel is repeatedly transmitted in the detection period of the RMSI data channel, a transport block size corresponding to the RMSI data channel, a modulation and coding scheme corresponding to the RMSI data channel, and a frequency domain frequency hopping range of the RMSI data channel.

3. The method according to claim 2, wherein
the bandwidth information of the RMSI control channel is different from the bandwidth information of the RMSI data channel.

4. The method according to claim 1, wherein

the second information is configuration information that corresponds to the first terminal device and that is of a first initial active bandwidth part, BWP; and
the third information is configuration information that corresponds to the second terminal device and that is of a second initial active bandwidth part, BWP.

5. A data transmission method, wherein the method comprises:

receiving (501), by a terminal device (110, 120), first information in a broadcast message from a network device, wherein
if the terminal device is a first terminal device that is a broadband terminal device or a broadband and narrowband integrated terminal device, the first information is parsed by the first terminal device to obtain second information, the second information being remaining minimum system information, RMSI, control channel configuration information that is used by the first terminal device to obtain through blind detection a control channel that is used by the first terminal device to determine corresponding RMSI for accessing the network device; or
if the terminal device is a second terminal device that is a narrowband terminal device, the first information is parsed by the second terminal device to obtain third information, the third information being RMSI data channel configuration information that is used by the second terminal device to directly determine corresponding RMSI for accessing the network device;
the method further comprising accessing, by the first terminal device or the second terminal device, a network device (100) based on the first information;
the method **characterised in that**:

the second information is RMSI control channel configuration information that corresponds to the first terminal device; and
the third information is RMSI data channel configuration information that corresponds to the second terminal device.

6. The method according to claim 5, wherein

the configuration information of the RMSI control channel comprises at least one of the following information: bandwidth information of the RMSI control channel, a detection period corresponding to the RMSI control channel, a detection moment corresponding to the RMSI control channel, a subcarrier spacing corresponding to the RMSI control channel, a time domain resource of the RMSI control channel, and a quantity of times the RMSI control channel is repeatedly transmitted in the detection period of the RMSI control channel; and/or
the configuration information of the RMSI data channel comprises at least one of the following information: bandwidth information of the RMSI data channel, a detection period corresponding to the RMSI data channel, a detection moment corresponding to the RMSI data channel, a subcarrier spacing corresponding to the RMSI data channel, a time domain resource of the RMSI data channel, a quantity of times the RMSI data channel is repeatedly transmitted in the detection period of the RMSI data channel, a transport block size corresponding to the RMSI data channel, a modulation and coding scheme corresponding to the RMSI data channel, and a frequency domain frequency hopping range of the RMSI data channel.

**7.** The method according to claim 5, wherein

the second information is configuration information that corresponds to the first terminal device and that is of a first initial active bandwidth part, BWP; and
the third information is configuration information that corresponds to the second terminal device and that is of a second initial active bandwidth part, BWP.

**8.** A network device, wherein the network device is configured to perform the method according to any one of claims 1 to 4.

**9.** A terminal device, wherein the terminal device is configured to perform the method according to any one of claims 5 to 7.

**10.** A computer-readable storage medium storing computer executable instructions which, when executed by a processor of a network device, cause the network device to perform the method according to any one of claims 1 to 4.

**11.** A computer-readable storage medium storing computer executable instructions which, when executed by a processor of a terminal device, cause the terminal device to perform the method according to any one of claims 5 to 7.

**Patentansprüche**

**1.** Datenübertragungsverfahren, wobei das Verfahren Folgendes umfasst:

Senden (401) durch eine Netzwerkvorrichtung (100), von ersten Informationen in einer Rundrufnachricht an ein erstes Endgerät (110) und ein zweites Endgerät (120), wobei das erste Endgerät (110) ein Breitband-Endgerät oder ein Endgerät mit integriertem Breitband und Schmalband ist und das zweite Endgerät (120) ein Schmalband-Endgerät ist;
Empfangen (402), durch die Netzwerkvorrichtung (100), einer Zugriffsanfrage des ersten Endgeräts (110) und/oder des zweiten Endgeräts (120); und
Einrichten, durch die Netzwerkvorrichtung (100), einer jeweiligen Verbindung mit dem ersten Endgerät (110) und/oder dem zweiten Endgerät (120);
wobei:

die ersten Informationen durch das erste Endgerät geparst werden, um zweite Informationen zu erlangen, wobei die zweiten Informationen Remaining-Minimum-System-Informationen-Steuerkanalkonfigurationsinformationen, RMSI-Steuerkanalkonfigurationsinformationen, sind, die durch das erste Endgerät verwendet werden, um durch Blinddetektion einen Steuerkanal zu erlangen, der durch das erste Endgerät verwendet wird, um entsprechende RMSI zum Zugreifen auf die Netzwerkvorrichtung zu bestimmen; und
die ersten Informationen durch das zweite Endgerät geparst werden, um dritte Informationen zu erlangen, wobei die dritten Informationen RMSI-Datenkanalkonfigurationsinformationen sind, die durch das zweite Endgerät verwendet werden, um entsprechende RMSI zum Zugreifen auf die Netzwerkvorrichtung direkt zu bestimmen;
wobei das Verfahren **dadurch gekennzeichnet ist, dass**:

die zweiten Informationen RMSI-Steuerkanalkonfigurationsinformationen sind, die dem ersten Endgerät entsprechen; und
die dritten Informationen RMSI-Datenkanalkonfigurationsinformationen sind, die dem zweiten Endgerät entsprechen.

**2.** Verfahren nach Anspruch 1, wobei

die Konfigurationsinformationen des RMSI-Steuerkanals mindestens eine der folgenden Informationen umfassen: Bandbreiteninformationen des RMSI-Steuerkanals, eine dem RMSI-Steuerkanal entsprechende Detektionsperiode, einen dem RMSI-Steuerkanal entsprechenden Detektionszeitpunkt, einen dem RMSI-Steuerkanal entsprechenden Subträgerabstand, eine Zeitdomänenressource des RMSI-Steuerkanals und eine Anzahl an Malen, mit welcher der RMSI-Steuerkanal in der Detektionsperiode des RMSI-Steuerkanals wiederholt übertragen wird; und/oder

die Konfigurationsinformationen des RMSI-Datenkanals mindestens eine der folgenden Informationen umfassen: Bandbreiteninformationen des RMSI-Datenkanals, eine dem RMSI-Datenkanal entsprechende Detektionsperiode, einen dem RMSI-Datenkanal entsprechenden Detektionszeitpunkt, einen dem RMSI-Datenkanal entsprechenden Subträgerabstand, eine Zeitdomänenressource des RMSI-Datenkanals und eine Anzahl an Malen, mit welcher der RMSI-Datenkanal in der Detektionsperiode des RMSI-Datenkanals wiederholt übertragen wird, eine dem RMSI-Datenkanal entsprechende Transportblockgröße, ein dem RMSI-Datenkanal entsprechendes Modulations- und Kodierungsschema und einen Frequenzdomänenfrequenzsprungbereich des RMSI-Datenkanals.

3. Verfahren nach Anspruch 2, wobei
sich die Bandbreiteninformationen des RMSI-Steuerkanals von den Bandbreiteninformationen des RMSI-Datenkanals unterscheiden.

4. Verfahren nach Anspruch 1, wobei

die zweiten Informationen Konfigurationsinformationen sind, die dem ersten Endgerät entsprechen und von einem ersten anfänglichen aktiven Bandbreitenanteil, BWP, stammen; und
die dritten Informationen Konfigurationsinformationen sind, die dem zweiten Endgerät entsprechen und von einem zweiten anfänglichen aktiven Bandbreitenanteil, BWP, stammen.

5. Datenübertragungsverfahren, wobei das Verfahren Folgendes umfasst:

Empfangen (501), durch ein Endgerät (110, 120), von ersten Informationen in einer Rundrufnachricht von einer Netzwerkvorrichtung, wobei
wenn das Endgerät ein erstes Endgerät ist, das ein Breitband-Endgerät oder ein Endgerät mit integriertem Breitband und Schmalband ist, die ersten Informationen durch das erste Endgerät geparst werden, um zweite Informationen zu erlangen, wobei die zweiten Informationen Remaining-Minimum-System-Informationen-Steuerkanalkonfigurationsinformationen, RMSI-Steuerkanalkonfigurationsinformationen, sind, die durch das erste Endgerät verwendet werden, um durch Blinddetektion einen Steuerkanal zu erlangen, der durch das erste Endgerät verwendet wird, um entsprechende RMSI zum Zugreifen auf die Netzwerkvorrichtung zu bestimmen; oder
wenn das Endgerät ein zweites Endgerät ist, das ein Schmalband-Endgerät ist, die ersten Informationen durch das zweite Endgerät geparst werden, um dritte Informationen zu erlangen, wobei die dritten Informationen RMSI-Datenkanalkonfigurationsinformationen sind, die durch das zweite Endgerät verwendet werden, um entsprechende RMSI zum Zugreifen auf die Netzwerkvorrichtung direkt zu bestimmen;
wobei das Verfahren ferner Zugreifen, durch das erste Endgerät oder das zweite Endgerät, auf eine Netzwerkvorrichtung (100) basierend auf den ersten Informationen umfasst;
wobei das Verfahren **dadurch gekennzeichnet ist, dass**:

die zweiten Informationen RMSI-Steuerkanalkonfigurationsinformationen sind, die dem ersten Endgerät entsprechen; und
die dritten Informationen RMSI-Datenkanalkonfigurationsinformationen sind, die dem zweiten Endgerät entsprechen.

6. Verfahren nach Anspruch 5, wobei

die Konfigurationsinformationen des RMSI-Steuerkanals mindestens eine der folgenden Informationen umfassen: Bandbreiteninformationen des RMSI-Steuerkanals, eine dem RMSI-Steuerkanal entsprechende Detektionsperiode, einen dem RMSI-Steuerkanal entsprechenden Detektionszeitpunkt, einen dem RMSI-Steuerkanal entsprechenden Subträgerabstand, eine Zeitdomänenressource des RMSI-Steuerkanals und eine Anzahl an Malen, mit welcher der RMSI-Steuerkanal in der Detektionsperiode des RMSI-Steuerkanals wiederholt übertragen wird; und/oder
die Konfigurationsinformationen des RMSI-Datenkanals mindestens eine der folgenden Informationen umfassen: Bandbreiteninformationen des RMSI-Datenkanals, eine dem RMSI-Datenkanal entsprechende Detektionsperiode, einen dem RMSI-Datenkanal entsprechenden Detektionszeitpunkt, einen dem RMSI-Datenkanal entsprechenden Subträgerabstand, eine Zeitdomänenressource des RMSI-Datenkanals und eine Anzahl an Malen, mit welcher der RMSI-Datenkanal in der Detektionsperiode des RMSI-Datenkanals wiederholt übertragen wird, eine dem RMSI-Datenkanal entsprechende Transportblockgröße, ein dem RMSI-Datenkanal entsprechendes Modulations- und Kodierungsschema und einen Frequenzdomänenfrequenzsprungbereich des RMSI-Datenkanals.

**7.** Verfahren nach Anspruch 5, wobei

die zweiten Informationen Konfigurationsinformationen sind, die dem ersten Endgerät entsprechen und von einem ersten anfänglichen aktiven Bandbreitenanteil, BWP, stammen; und
die dritten Informationen Konfigurationsinformationen sind, die dem zweiten Endgerät entsprechen und von einem zweiten anfänglichen aktiven Bandbreitenanteil, BWP, stammen.

**8.** Netzwerkvorrichtung, wobei die Netzwerkvorrichtung dazu konfiguriert ist, das Verfahren nach einem der Ansprüche 1 bis 4 durchzuführen.

**9.** Endgerät, wobei das Endgerät dazu konfiguriert ist, das Verfahren nach einem der Ansprüche 5 bis 7 durchzuführen.

**10.** Computerlesbares Speichermedium, das computerausführbare Anweisungen speichert, die, wenn sie durch einen Prozessor einer Netzwerkvorrichtung ausgeführt werden, die Netzwerkvorrichtung veranlassen, das Verfahren nach einem der Ansprüche 1 bis 4 durchzuführen.

**11.** Computerlesbares Speichermedium, das computerausführbare Anweisungen speichert, die, wenn sie durch einen Prozessor eines Endgeräts ausgeführt werden, das Endgerät veranlassen, das Verfahren nach einem der Ansprüche 5 bis 7 durchzuführen.

**Revendications**

**1.** Procédé de transmission de données, dans lequel le procédé comprend :

l'envoi (401), par un dispositif de réseau (100), de premières informations dans un message de diffusion à un premier dispositif terminal (110) et à un second dispositif terminal (120), le premier dispositif terminal (110) étant un dispositif terminal à large bande ou un dispositif terminal intégré à large bande et à bande étroite et le second dispositif terminal (120) étant un dispositif terminal à bande étroite ;
la réception (402), par le dispositif de réseau (100), d'une demande d'accès du premier dispositif terminal (110) et/ou du second dispositif terminal (120) ; et
l'établissement, par le dispositif de réseau (100), d'une connexion respective au premier dispositif terminal (110) et/ou au second dispositif terminal (120) ;
dans lequel :

les premières informations sont analysées par le premier dispositif terminal pour obtenir de deuxièmes informations, les deuxièmes informations étant des informations de configuration de canal de commande d'informations système minimales restantes, RMSI, utilisées par le premier dispositif terminal pour obtenir, par détection aveugle, un canal de commande utilisé par le premier dispositif terminal pour déterminer les RMSI correspondantes pour accéder au dispositif de réseau ; et
les premières informations sont analysées par le second dispositif terminal pour obtenir de troisièmes informations, les troisièmes informations étant des informations de configuration de canal de données RMSI utilisées par le second dispositif terminal pour déterminer directement les RMSI correspondantes pour accéder au dispositif de réseau ;
le procédé étant **caractérisé en ce que** :

les deuxièmes informations sont des informations de configuration de canal de commande RMSI qui correspondent au premier dispositif terminal ; et
les troisièmes informations sont des informations de configuration de canal de données RMSI qui correspondent au second dispositif terminal.

**2.** Procédé selon la revendication 1, dans lequel

les informations de configuration du canal de commande RMSI comprennent au moins l'une des informations suivantes : des informations de bande passante du canal de commande RMSI, une période de détection correspondant au canal de commande RMSI, un instant de détection correspondant au canal de commande RMSI, un espacement de sous-porteuses correspondant au canal de commande RMSI, une ressource de domaine temporel du canal de commande RMSI et un nombre de transmissions répétées du canal de commande RMSI pendant la période de détection du canal de commande RMSI ; et/ou

les informations de configuration du canal de données RMSI comprennent au moins l'une des informations suivantes : des informations de bande passante du canal de données RMSI, une période de détection correspondant au canal de données RMSI, un instant de détection correspondant au canal de données RMSI, un espacement de sous-porteuses correspondant au canal de données RMSI, une ressource de domaine temporel du canal de données RMSI, un nombre de transmissions répétées du canal de données RMSI pendant la période de détection du canal de données RMSI, une taille de bloc de transport correspondant au canal de données RMSI, un schéma de modulation et de codage correspondant au canal de données RMSI et une plage de sauts de fréquence de domaine fréquentiel du canal de données RMSI.

3. Procédé selon la revendication 2, dans lequel
les informations de bande passante du canal de commande RMSI sont différentes des informations de bande passante du canal de données RMSI.

4. Procédé selon la revendication 1, dans lequel

les deuxièmes informations sont des informations de configuration qui correspondent au premier dispositif terminal et qui sont d'une première partie de bande passante, BWP, active initiale ; et
les troisièmes informations sont des informations de configuration qui correspondent au second dispositif terminal et qui sont d'une seconde partie de bande passante, BWP, active initiale.

5. Procédé de transmission de données, dans lequel le procédé comprend :

la réception (501), par un dispositif terminal (110, 120), des premières informations dans un message de diffusion provenant d'un dispositif de réseau, dans lequel
si le dispositif terminal est un premier dispositif terminal qui est un dispositif terminal à large bande ou un dispositif terminal intégré à large bande et à bande étroite, les premières informations sont analysées par le premier dispositif terminal pour obtenir de deuxièmes informations, les deuxièmes informations étant des informations de configuration de canal de commande d'informations système minimales restantes, RMSI, utilisées par le premier dispositif terminal pour obtenir, par détection aveugle, un canal de commande utilisé par le premier dispositif terminal pour déterminer les RMSI correspondantes pour accéder au dispositif de réseau ; ou
si le dispositif terminal est un second dispositif terminal qui est un dispositif terminal à bande étroite, les premières informations sont analysées par le second dispositif terminal pour obtenir de troisièmes informations, les troisièmes informations étant des informations de configuration de canal de données RMSI utilisées par le second dispositif terminal pour déterminer directement les RMSI correspondantes pour accéder au dispositif de réseau ;
le procédé comprenant en outre l'accès, par le premier dispositif terminal ou le second dispositif terminal, à un dispositif de réseau (100) sur la base des premières informations ;
le procédé étant **caractérisé en ce que** :

les deuxièmes informations sont des informations de configuration de canal de commande RMSI qui correspondent au premier dispositif terminal ; et
les troisièmes informations sont des informations de configuration de canal de données RMSI qui correspondent au second dispositif terminal.

6. Procédé selon la revendication 5, dans lequel

les informations de configuration du canal de commande RMSI comprennent au moins l'une des informations suivantes : des informations de bande passante du canal de commande RMSI, une période de détection correspondant au canal de commande RMSI, un instant de détection correspondant au canal de commande RMSI, un espacement de sous-porteuses correspondant au canal de commande RMSI, une ressource de domaine temporel du canal de commande RMSI et un nombre de transmissions répétées du canal de commande RMSI pendant la période de détection du canal de commande RMSI ; et/ou
les informations de configuration du canal de données RMSI comprennent au moins l'une des informations suivantes : des informations de bande passante du canal de données RMSI, une période de détection correspondant au canal de données RMSI, un instant de détection correspondant au canal de données RMSI, un espacement de sous-porteuses correspondant au canal de données RMSI, une ressource de domaine temporel du canal de données RMSI, un nombre de transmissions répétées du canal de données RMSI pendant la période de détection du canal de données RMSI, une taille de bloc de transport correspondant au canal de données RMSI, un schéma de modulation et de codage correspondant au canal de données RMSI et une plage de sauts de fréquence de domaine fréquentiel du canal de données RMSI.

**7.** Procédé selon la revendication 5, dans lequel

les deuxièmes informations sont des informations de configuration qui correspondent au premier dispositif terminal et qui sont d'une première partie de bande passante, BWP, active initiale ; et
les troisièmes informations sont des informations de configuration qui correspondent au second dispositif terminal et qui sont d'une seconde partie de bande passante, BWP, active initiale, BWP.

**8.** Dispositif de réseau, dans lequel le dispositif de réseau est configuré pour réaliser le procédé selon l'une quelconque des revendications 1 à 4.

**9.** Dispositif terminal, dans lequel le dispositif terminal est configuré pour réaliser le procédé selon l'une quelconque des revendications 5 à 7.

**10.** Support de stockage lisible par ordinateur stockant des instructions exécutables par ordinateur, qui, lorsqu'elles sont exécutées par un processeur d'un dispositif de réseau, amènent le dispositif de réseau à réaliser le procédé selon l'une quelconque des revendications 1 à 4.

**11.** Support de stockage lisible par ordinateur stockant des instructions exécutables par ordinateur qui, lorsqu'elles sont exécutées par un processeur d'un dispositif terminal, amènent le dispositif terminal à réaliser le procédé selon l'une quelconque des revendications 5 à 7.

Network device (100)

Second terminal device (120)

First terminal device (110)

1. Read broadcast information

2. Obtain access-related configuration information or scheduling information

3. Access the network device

1. Read broadcast information

2. Obtain access-related configuration information or scheduling information

3. Access the network device

FIG. 1

239

192

182

Subcarrier number

56

47

0

PBCH

PSS | PBCH | SSS | PBCH

PBCH

0   1   2   3

OFDM symbol

FIG. 2

Terminal
device

Network device (100)

Terminal
device

...

...

...

First terminal
device (110)

Second terminal
device (120)

1. Read broadcast information
2. Obtain first access network configuration information corresponding to the first terminal device
3. Access the network device based on the first access network configuration information

1. Read broadcast information
2. Obtain second access network configuration information corresponding to the second terminal device
3. Access the network device based on the second access network configuration information

FIG. 3

EP 3 913 839 B1

A network device sends first information to at least two terminal devices 〔 401

The network device receives access requests of the terminal devices, and establishes connections to the terminal devices 〔 402

FIG. 4

A terminal device receives first information from a network device 〔 501

The terminal device accesses the network device based on the first information 〔 502

FIG. 5

FIG. 6

⟶ Parsing process of a first terminal device

➤ Parsing process of a second terminal device

FIG. 7

| MIB | ----------→ | RMSI data channel |

----→ Parsing process of a first terminal device/
second terminal device

FIG. 8

| MIB | ----------→ | RMSI information |

----→ Parsing process of a first terminal device/
second terminal device

FIG. 9

Network device (100)

Sending module (1010)

Processing module (1020)

Storage module (1030)

FIG. 10

First terminal device (110)/
Second terminal device (120)

Receiving module (1110)

Processing module (1120)

Storage module (1130)

FIG. 11

EP 3 913 839 B1

Disabled

| Normal operation<br>Normal operation | First radio link failure detection<br>RLF detection | No recovery during a time window T1<br>No recovery during T1 | No recovery during a time window T2<br>No recovery during T2 | Go back to idle<br>Go back to idle |
|---|---|---|---|---|

First radio link RLM process

Enabled

| Normal operation<br>Normal operation | First radio link failure detection<br>RLF detection | No recovery during a time window T1<br>No recovery during T1 | Determine, by using a second RLM mechanism, whether a second radio link failure occurs |
|---|---|---|---|

Yes → Go back to idle<br>Go back to idle

No → Perform data transmission with a network device by using a second radio link

FIG. 12

Disabled

| Normal operation Normal operation | First radio link failure detection RLF detection | No recovery during a time window T1 No recovery during T1 | No recovery during a time window T2 No recovery during T2 | Go back to idle Go back to idle |
|---|---|---|---|---|

First radio link RLM process

Enabled

| Normal operation Normal operation | First radio link failure detection RLF detection | Determine, by using a second RLM mechanism, whether a second radio link failure occurs |
|---|---|---|

Yes → Go back to idle Go back to idle

No → Perform data transmission with a network device by using a second radio link

FIG. 13

W0 x RS  W0 x RS  W0 x RS  W0 x RS  W1 x RS  W1 x RS  W1 x RS  W1 x RS  W2 x RS  W2 x RS  W2 x RS  W2 x RS  W3 x RS  W3 x RS  W3 x RS  W3 x RS

Resource block RB

Precoding resource block group PRG   Precoding resource block group PRG   Precoding resource block group PRG   Precoding resource block group PRG

Time
Time

Data transmission resource

FIG. 14

FIG. 15

**EP 3 913 839 B1**

## REFERENCES CITED IN THE DESCRIPTION

**Patent documents cited in the description**

- WO 2018128427 A1
- WO 2018230965 A2